# EUROPEAN PATENT SPECIFICATION

(11) **EP 2 945 970 B1**
(45) Date of publication and mention of the grant of the patent: **10.04.2019**
(21) Application number: 14700301.6
(22) Date of filing: 10.01.2014
(51) Int. Cl.: C08F 2/10

(54) **HIGH MOLECULAR WEIGHT POLYMERIC DISPERSIONS**
POLYMERDISPERSION MIT HOHEM MOLEKULARGEWICHT
DISPERSIONS POLYMÉRIQUES DE POIDS MOLÉCULAIRE ÉLEVÉES

(30) Priority: 16.01.2013 EP 13151526
(43) Date of publication of application: 25.11.2015
(73) Proprietor: Solenis Technologies Cayman, L.P., 8200 Schaffhausen (CH)
(72) Inventor: BRÖCHER, Markus, 45470 Mülheim an der Ruhr (DE); SIEVERLING, Nathalie, 47051 Duisburg (DE); WOEBEL, Franz-Wolfgang, 47877 Willich (DE); BOEKELO, Christian, 47807 Krefeld (DE)
(74) Representative: LKGLOBAL Lorenz & Kopf PartG mbB Patentanwälte
(86) International application number: PCT/EP2014/050399
(87) International publication number: WO 2014/111316

(56) References cited:
- US-A1- 2008 033 094
- US-A1- 2009 050 571

## Description

### FIELD OF THE INVENTION

The invention relates to polymer dispersions, methods for their preparation and their use. The polymer dispersions are prepared in a radical polymerization reaction which is initiated by a combination of different initiators. The polymer dispersions are useful *inter alia* as flocculants, dewatering (drainage) aids and retention aids in papermaking.

### BACKGROUND ART

In the manufacture of paper, a papermaking furnish, i.e. an aqueous slurry of cellulosic fiber having a water content of usually more than 95 wt.-% is formed into a paper sheet typically having a water content of less than 5 wt.-%. Hence, the dewatering (drainage) and retention aspects of papermaking are important to the efficiency and cost of the manufacture. Typically, a cellulosic thin stock is drained on a moving screen to form a sheet which is then dried. It is well known to apply water soluble polymers to the cellulosic suspension in order to effect flocculation of the cellulosic solids and enhance drainage on the moving screen. According to a well known method for papermaking, a cellulosic suspension is formed, flocculated by means of a flocculant, mechanically sheared, optionally re-flocculated by means of a re-flocculant, drained on a screen to form a sheet and then dried.

DE-A 44 06 624 discloses low viscous, cross-linked aqueous polymer dispersions that are prepared by polymerizing a water-soluble monomer, optionally a hydrophobic monomer and a cross-linker in the presence of a polymeric dispersant. The dispersions are useful as thickeners, flocculants and retention aids.

DE-A 195 32 229 discloses cross-linkable and cross-linked aqueous polymer dispersions that are prepared by polymerizing a water-soluble monomer, a cross-linkable N-methylol-compound, optionally a cross-linker and optionally a hydrophobic monomer in the presence of a polymeric dispersant. The polymer dispersions are useful as thickeners, flocculation aids, retention aids in papermaking, and adhesives, particularly as wallpaper coatings.

US 5,840,804 discloses a method of producing low-viscosity water-based water-soluble polymer dispersions having a high concentration of the principal substance comprising polymerizing the following monomer components: (a1) 50-99.999 wt. % of at least one water-soluble monomer; (a2) 0.001-1 wt. % of at least one cross-linking monomer with at least two ethylenically unsaturated radically polymerizable groups; (a3) 0-30 wt. %, particularly 1-25 wt. %, of at least one hydrophobic monomer; and (a4) 0-25 wt. %, particularly 0.1-15 wt. %, of at least one amphiphilic monomer, in aqueous solution, in the presence of at least one polymer dispersant, to form a polymer (A), where the sum of the amounts of the components represented by the monomers (a1), (a2), (a3), and (a4) is 100 wt. % of the monomers, the weight average molecular weight of the resulting polymer (A) is at least 500,000 Dalton, and polymer (A) is incompatible with the dispersant.

US 2008/033094 (A1) relates to a water-in-oil polymer dispersion which comprises a polymer (A) having a cationic monomer content of at least 55% by weight and at least one polymer dispersant (B) based on cationized dialkylaminoalkyl(meth)acrylamides having an average molecular weight of more than 350,000 to 1 million g/mol.

US 2009/050571 (A1) discloses water-in-water polymer dispersions containing a polymer (A) with a cationic monomer fraction of up to 60 wt. % and at least one polymer dispersant (B), based on cationised dialkylaminoalkyl (meth)acrylamides with an average molecular weight of between 75,000 and 350,000 g/mol.

The properties of the polymer dispersions of the prior art are, however, not satisfactory in every respect.

### SUMMARY OF THE INVENTION

A first aspect of the invention relates to a method for manufacturing a polymer dispersion comprising the steps of
(A) preparing a reaction mixture comprising
   (i) a polymeric dispersant; and
   (ii) a monomer composition comprising radically polymerizable monomers;
(B) optionally, heating the reaction mixture to a temperature above room temperature;
(C) polymerizing the radically polymerizable monomers by adding to the reaction mixture sequentially or simultaneously
   (iii) a predetermined amount of a redox initiator system comprising an oxidizing agent and a reducing agent;
   (iv) a predetermined amount of a first auxiliary radical initiator; and
   (v) a predetermined amount of a second auxiliary radical initiator;
   wherein the second initiator is neither identical to the oxidizing agent which is comprised in the redox initiator system, nor to the first radical initiator;
   with the proviso that at least a portion of said predetermined amount of the redox initiator system, at least a portion of said predetermined amount of the first auxiliary radical initiator, and at least a portion of said predetermined amount of the second auxiliary radical initiator is added to the reaction mixture before 90 mol-% of the radically polymerizable monomers, which were originally contained in the monomer composition, are polymerized; and
(D) optionally, reducing the residual monomer content by adding to the reaction mixture
   - the remainder of said predetermined amount of the redox initiator system, the remainder of said predetermined amount of the first auxiliary radical initiator, and/or the remainder of said predetermined amount of the second auxiliary radical initiator; and/or
   - a third auxiliary radical initiator.

It has been surprisingly found that the polymer dispersions thus obtained have improved properties, particularly under shear conditions, with respect to dewatering of mud, paper retention and ash retention.

The *in situ* polymerization in step (C) of the radically polymerizable monomers in the presence of the polymeric dispersant yields a polymer dispersion, wherein the resultant polymer that is obtained in step (C) is intercalated in the polymeric dispersant thereby forming an interpenetrating complex.

Polymer dispersions of this type are not obtainable by polymerizing the monomers in absence of the polymeric dispersant and adding the polymeric dispersant thereafter, but require the presence of the polymeric dispersant during the polymerization reaction *in situ.* Otherwise, different products exhibiting different properties are obtained. In particular, when adding a dispersion of a polymeric dispersant to a polymer dispersion that has been obtained separately by polymerizing the radically polymerizable monomers, a gel block would be obtained that could not be properly handled any further. Depending on the total concentration of the monomers, it would practically be impossible to homogeneously distribute the polymeric dispersant in the solvent of the polymer dispersion in order to form an interpenetrating complex. Further, when trying to subsequently introduce the polymeric dispersant in form of a solution, the solvent content thereof would dilute the overall composition.

### BRIEF DESCRIPTION OF THE DRAWINGS

Figure 1 shows the brine viscosities (shown as bars) and the product viscosities (shown as □) of the inventive polymeric dispersion PI-1 and the comparative polymeric dispersion PC-1.
Figure 2 shows the make-down behavior of the inventive polymeric dispersion PI-1 and the comparative polymeric dispersions PC-1a and PC-1b.
Figure 3 shows the brine viscosities of the inventive polymeric dispersion PI-2 and the comparative polymeric dispersion PC-2.
Figure 4 shows the positive impact on retention at 500 ppm polymer for the inventive polymeric dispersion PI-2 compared to the comparative polymeric dispersion PC-2 and the blank.
Figure 5 shows the positive impact on the ash retention at 550ºC and 500 ppm polymer for the inventive polymeric dispersion PI-2 compared to the comparative polymeric dispersion PC-2 and the blank.
Figure 6 shows the better dewatering performance of the inventive polymeric dispersion PI-2 compared to the comparative polymeric dispersion PC-2 and the blank.
Figure 7 shows the better dewatering performance of the inventive polymeric dispersion PI-1 compared to the comparative polymeric dispersion PC-1.
Figure 8 shows the positive impact on retention at 1500 ppm polymer for the inventive polymeric dispersion PI-1 compared to the comparative polymeric dispersion PC-1 and the blank.
Figure 9 shows the positive impact on drainage at 1500 ppm polymer for the inventive polymeric dispersion PI-1 compared to the comparative polymeric dispersion PC-1 and the blank.
Figure 10 shows the positive impact on ash retention at 1500 ppm polymer for the inventive polymeric dispersion PI-1 compared to the comparative polymeric dispersion PC-1 and the blank.
Figure 11 shows the positive impact on retention for the inventive polymeric dispersion PI-1 and the combination of PI-1 and additive compared to the comparative polymeric dispersion PC-1 and the blank.
Figure 12 shows the positive impact on drainage for the inventive polymeric dispersion PI-1 and the combination of PI-1 and additive compared to the comparative polymeric dispersion PC-1 and the blank.
Figure 13 shows the positive impact on retention at 1500 ppm polymer for the inventive polymeric dispersion PI-1 compared to the comparative polymeric dispersion PC-1 and the blank.
Figure 14 shows the positive impact on drainage at 1500 ppm polymer for the inventive polymeric dispersion PI-1 compared to the comparative polymeric dispersion PC-1 and the blank.
Figure 15 shows the positive impact on ash retention at 1500 ppm polymer for the inventive polymeric dispersion PI-1 compared to the comparative polymeric dispersion PC-1 and the blank.
Figure 16 shows the positive impact on ash retention at 1000 and 1500 ppm polymer for the inventive polymeric dispersion PI-1 with low actives and high salt compared to the comparative polymeric dispersion PC-1, PC-1 with corresponding low actives and the blank.

### DETAILED DESCRIPTION OF THE INVENTION

For the purpose of specification, the term "(alk)acrylate" shall refer to alkacrylate as well as acrylate. In analogy, the term "(meth)acrylate" shall refer to methacrylate as well as acrylate.

For the purpose of specification, the term "homopolymer" shall refer to a polymer obtained by polymerization of substantially a single type of monomer, whereas the term "copolymer" shall refer to a polymer obtained by polymerization of two, three, four or more different types of monomers (co-monomers).

For the purpose of specification, "alkyl" shall mean any saturated linear, branched and/or cyclic hydrocarbon having a single binding partner, such as methyl, ethyl, n-propyl, isopropyl, n-butyl, iso-butyl, sec-butyl, tert-butyl, pentyl, hexyl, heptyl, octyl, nonyl, decyl, isodecyl, undecyl, dodecyl, tridecyl, tetradecyl, pentadecyl, hexadecyl, heptadecyl, octadecyl, nonadecyl, eicosyl, 2-ethyl-hexyl, cyclopropyl, cyclobutyl, cyclopentyl, cyclohexyl, cycloheptyl, cyclooctyl, methylcyclohexyl, methylcyclopentylethenyl, adamantyl, and the like.

For the purpose of specification, the term "alkylene" shall mean any saturated linear, branched and/or cyclic hydrocarbon having two binding partners, such as -CH₂CH₂-, -CH₂CH₂CH₂- and -CH₂CH(CH₃)CH₂-.

For the purpose of specification, the term "water-soluble", particularly when it relates to the water-solubility of monomers, preferably refers to a solubility in pure water at ambient temperature of at least 10 g l⁻¹, more preferably at least 25 g l⁻¹, still more preferably at least 50 g l⁻¹, yet more preferably at least 100 g l⁻¹, most preferably at least 250 g l⁻¹ and in particular at least 500 g l⁻¹. For the purpose of specification, the term "water-soluble", particularly when it relates to the water-solubility of polymers, preferably refers to a solubility in pure water at ambient temperature of at least 1.0 g l⁻¹, more preferably at least 2.5 g l⁻¹, still more preferably at least 5.0 g l⁻¹, yet more preferably at least 10.0 g l⁻¹, most preferably at least 25.0 g l⁻¹ and in particular at least 50.0 g l⁻¹.

For the purpose of specification, the term "water-swellable" preferably means that the polymer, preferably the polymer that is obtained in step (C), while being not water-soluble, absorbs an appreciable amount of water. Typically, the weight of the polymer increases by at least 2 wt.-%, preferably at least 5 wt.-%, after being immersed in water at room temperature, e.g., 25 °C, for 1 hour, more preferably by about 60 to about 100 times its dry weight.

For the purpose of specification, "sequentially", e.g. a sequential addition of different compounds to a reaction mixture, means that only after the first compound has been added completely to the reaction mixture, the second compound is added after which complete addition the third compound is added, and so on.

For the purpose of specification, "simultaneously", e.g. a simultaneous addition of different compounds to a reaction mixture, means that said compounds are added at the same interval of time or at overlapping intervals of time.

The polymer dispersions according to the invention may be water-in-water polymer dispersions, such as suspensions or emulsions; oil-in-water polymer dispersions, such as suspensions or emulsions; or water-in-oil polymer dispersions, such as suspensions or emulsions; or mixtures thereof.

In a preferred embodiment, the polymer dispersion is a water-in-water polymer dispersion. For the purpose of specification, "water-in-water polymer dispersion" refers to an aqueous system containing a water soluble or water swellable polymer and a polymeric dispersant, wherein the water-soluble or water swellable polymer has been obtained in step (C) by *in situ* polymerization of suitable monomers in the presence of said polymeric dispersant. Water-in-water polymer dispersions are well known in the art. In this regard it can be referred to, e.g., US-A 2004 0034145, US-A 2004 0046158, US-A 2005 0242045, and US-A 2007 0203290.

A water-in-water dispersion is based on a principle involving a polymer precipitation in water, preferably in an aqueous salt solution, e.g. brine. The final product obtained is a stable dispersion of microscopic polymer particles in water. These dispersions are solvent free, making this range of products environmentally friendly.

In another preferred embodiment, the polymer dispersion is a water-in-oil polymer dispersion, or an oil-in-water polymer dispersion. When the reaction mixture according to the invention is an oil-in-water dispersion, preferably an emulsion, surfactants which stabilize the emulsion may be added. The surfactant may be an amphiphilic organic compound, e.g. sodium stearate or 4-(5-dodecyl) benzenesulfonate. The person skilled in the art knows surfactants and is able to select an appropriate surfactant for an oil-in-water emulsion. When the reaction mixture according to the invention contains other solvents than water, solvents are preferred which are inert in the radical polymerization reactions described herein, i.e. those solvents which do not react in chain transfer reactions with the free radicals contained in the reaction mixture.

The polymeric dispersant as well as the polymer that is obtained in step (C) can serve as coagulant and/or flocculant. Chemical coagulation, the alteration of suspended and colloidal particles so they adhere to each other, is one type of chemical treatment process. Coagulation is a process that causes the neutralization of charges or a reduction of the repulsion forces between particles. Flocculation is the aggregation of particles into larger agglomerations ("flocs"). Coagulation is virtually instantaneous, while flocculation requires some time for the flocs to develop.

For the purpose of specification, the term "polymeric dispersant" preferably refers to a water-soluble or water-dispersible, preferably highly ionic, preferably cationic polymer of comparatively low molecular weight. When the overall electrical charge associated with particles and organic matter in water is negative, e.g. the cellulosic fiber suspension processed in papermaking, positively charged dispersants are preferably added to neutralize the electrical charge.

It should be emphasized that the presence of the polymeric dispersant during the radical polymerization is essential for the properties of the resultant polymer dispersion. Identical polymer dispersions are not obtainable by polymerizing the radically polymerizable monomers in absence of the polymeric dispersant and adding the polymeric dispersant thereafter. The polymeric dispersant is part of a dispersion into which the polymer is polymerized from the radically polymerizable monomers in step (C). In other words, the polymer obtained by the polymerization reaction is somehow embedded in the polymeric dispersant which is initially present.

The internal structure of the resulting interpenetrating polymer system of the polymeric dispersant and the polymer that is obtained in step (C), however, may not be reproduced by simply mixing a polymeric dispersant and a polymer separately obtained from the same radically polymerizable monomers as the polymer that is obtained in step (C).

According to the method of the invention a reaction mixture comprising (i) a polymeric dispersant and (ii) a monomer composition comprising radically polymerizable monomers is subjected to a (free) radical polymerization reaction in step (C).

In a preferred embodiment, the reaction mixture according to the invention is aqueous. Preferably, the aqueous reaction mixture comprises water, preferably deionized water. The water content may vary from 0.01 to 99.99 wt.-%. In a preferred embodiment, the water content is within the range of from 10 to 90 wt.-%, more preferably 15 to 85 wt.-%, still more preferably 20 to 80 wt.-%, yet more preferably 25 to 75 wt.-%, most preferably 30 to 70 wt.-% and in particular 35 to 65 wt.-%, based on the total weight of the aqueous reaction mixture. In another preferred embodiment, the water content is within the range of from 35 to 90 wt.-%, more preferably 40 to 85 wt.-%, still more preferably 45 to 80 wt.-%, yet more preferably 50 to 75 wt.-%, most preferably 55 to 70 wt.-%, based on the total weight of the aqueous reaction mixture.

Preferably, the water content of the aqueous reaction mixture is comparatively low so that the water content of the resultant water-in-water polymer dispersion is low as well. Under these circumstances it is not necessary to evaporate large amounts of water from the product after termination of polymerization in order to obtain highly concentrated water-in-water polymer dispersions.

The reaction mixture according to the invention comprises a polymeric dispersant. Preferably, the polymeric dispersant is ionic, more preferably cationic. Preferably, the polymeric dispersant is water-soluble or water-swellable. Preferably, the content of the polymeric dispersant is within the range of from 0.1 to 40 wt.-%, more preferably 0.5 to 35 wt.-%, still more preferably 1.0 to 30 wt.-%, yet more preferably 5.0 to 25 wt.-%, most preferably 10 to 20 wt.-% and in particular 12 to 16 wt.-%, based on the total weight of the reaction mixture. Preferably, the content of the polymeric dispersant is within the range of from 1 to 99 wt.-%, more preferably 40 to 70 wt.-% or 70 to 90 wt.-%, relative to the weight of the monomer composition. In a preferred embodiment, the content of the polymeric dispersant is within the range of from 60±20 wt.-%, more preferably 60±15 wt.-%, most preferably 60±10 wt.-% and in particular 60±5 wt.-%, relative to the weight of the monomer composition. In another preferred embodiment, the content of the polymeric dispersant is within the range of from 80±20 wt.-%, more preferably 80±15 wt.-%, most preferably 80±10 wt.-% and in particular 80±5 wt.-%, relative to the weight of the monomer composition.

In a preferred embodiment, the polymeric dispersant has a weight average molecular weight M_{w} of at least 230,000 g/mol. In another preferred embodiment, the polymeric dispersant is a water-soluble polymer having a weight average molecular weight M_{w} of at least 230,000 g/mol. Preferably, the weight average molecular weight M_{w} of the polymeric dispersant is within the range of from 230,000 to 1,500,000 g mol⁻¹, more preferably 230,000 to 1,300,000 g mol⁻¹, still more preferably 230,000 to 1,100,000 g mol⁻¹, yet more preferably 230,000 to 900,000 g mol⁻¹, most preferably 230,000 to 700,000 g mol⁻¹ and in particular 230,000 to 500,000 g mol⁻¹. In a preferred embodiment, the weight average molecular weight M_{w} of the polymeric dispersant is within the range of from 230,000 to 400,000 g mol⁻¹, more preferably 280,000 to 350,000 g mol⁻¹.

In a preferred embodiment, the weight average molecular weight and/or the chemical composition of the polymeric dispersant differs from the weight average molecular weight and/or the chemical composition of the polymer that is obtained in step (C).

Preferably, the molecular weight dispersity M_{w}/Mₙ of the polymeric dispersant is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

The polymeric dispersant can be non-ionic or ionic. Preferably, the polymeric dispersant is ionic, preferably cationic.

In a preferred embodiment the polymeric dispersant is a homopolymer or a copolymer. When the polymeric dispersant is a homopolymer, it is preferably derived from a cationic monomer. When the polymeric dispersant is a copolymer, it is preferably derived from at least one cationic monomer and at least one non-ionic co-monomer.

In this regard, "derived from" means that the polymer backbone of the polymeric dispersant comprises repetition units, i.e., repetition units are incorporated in the polymer backbone of the polymeric dispersant, which repetition units are formed from the corresponding monomers in the course of the polymerization reaction. For example, when the polymeric dispersant is derived from trimethylammoniumpropyl acrylamide (= DIMAPA quat.), the following repetition unit is incorporated in the polymer backbone:

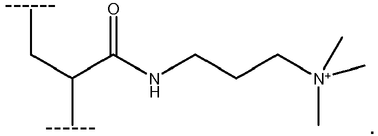

When the polymeric dispersant is a copolymer of at least one cationic monomer (e.g. DIMAPA quat.) and at least one non-ionic monomer (e.g. acrylamide), the content of the cationic monomer is preferably at least 50 wt.-%, more preferably at least 60 wt.-%, still more preferably at least 70 wt.-%, yet more preferably at least 80 wt.-%, most preferably at least 90 wt.-% and in particular at least 95 wt.-%, based on the total weight of all monomers incorporated in the polymeric dispersant.

Preferably, the polymeric dispersant is derived from one or more cationic monomers, more preferably from a single cationic monomer.

In a preferred embodiment, the polymeric dispersant is derived from one or more radically polymerizable, ethylenically unsaturated monomers. Preferably, the polymeric dispersant is derived from a monomer composition comprising a cationic monomer selected from the group consisting of (alk)acrylamidoalkyltrialkyl ammonium halides (e.g., trimethylammonium-alkyl(meth)acrylamide halides), (alk)acryloyloxyalkyl trialkyl ammonium halides (e.g., trimethylammoniumalkyl(meth)acrylate halides), alkenyl trialkyl ammonium halides and dialkenyl dialkyl ammonium halides (e.g., diallyldialkylammonium halides). More preferably, the polymeric dispersant is a cationic polymer derived from a monomer composition comprising a cationic monomer selected from the group consisting of trimethylammonium-alkyl(meth)acrylate halides, trimethylammoniumalkyl(meth)acrylamide halides and diallyldialkylammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

Preferably, the polymeric dispersant is derived from
- 30 to 100 wt.-%, more preferably 50 to 100 wt.-%, still more preferably 70 to 100 wt.-% of (alk)acrylamidoalkyltrialkyl ammonium halides, (alk)acryloyloxyalkyl trialkyl ammonium halides, alkenyl trialkyl ammonium halides, and/or dialkenyl dialkyl ammonium halides, and
- 0 to 70 wt.-%, more preferably 0 to 50 wt.-%, still more preferably 0 to 30 wt.-% of non-ionic monomers, still more preferably radically polymerizable non-ionic monomers according to general formula (I) 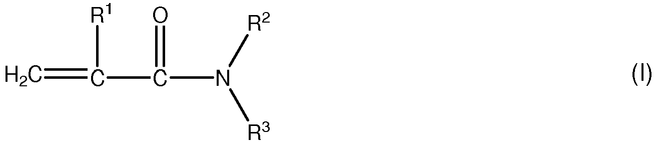
wherein
R¹ means hydrogen or C₁-C₃-alkyl; and
R² and R³ mean, independently of each other, hydrogen, C₁-C₅-alkyl or C₁-C₅-hydroxyalkyl,
most preferably (alk)acrylamide.

In a preferred embodiment, the polymeric dispersant is derived from a dialkenyl dialkyl ammonium halide, preferably a diallyl dimethyl ammonium halide (DADMAC).

In another preferred embodiment, the polymeric dispersant is a copolymerizate of epichlorohydrin and dialkylamine, preferably dimethylamine, i.e. poly-[N,N-dimethyl-2-hydroxy-propylen-(1,3)-ammonium chloride].

In still another preferred embodiment, the polymeric dispersant is derived from a radically polymerizable cationic monomer according to general formula (II) 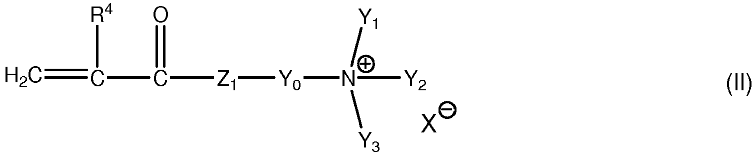 wherein
R⁴ means hydrogen or C₁-C₃-alkyl, preferably H or methyl;
Z₁ means O or NR⁵ with R⁵ being hydrogen or C₁-C₃-alkyl;
Y₀ means C₂-C₆-alkylene, optionally substituted with one or more hydroxy groups, preferably C₂-C₃-alkylene;
Y₁, Y₂, Y₃, independently of each other, mean C₁-C₆-alkyl, preferably methyl; and
X⁻ means halogen, pseudo-halogen (e.g., CN⁻, SCN⁻, NCS⁻, N₃⁻), acetate or SO₄CH₃⁻ , preferably chloride.

Preferably, Y₁, Y₂ and Y₃ are identical, preferably methyl. In a preferred embodiment, Z₁ is O or NH, Y₀ is ethylene or propylene, R⁴ is hydrogen or methyl, and Y₁, Y₂ and Y₃ are methyl. The cationic monomer according to general formula (II) may be an ester (Z₁ = O), such as trimethylammonium-ethyl(meth)acrylate (ADAME quat.). Preferably, however, the cationic monomer according to general formula (I) is an amide (Z₁ = NH), particularly trimethylammonium-propyl acrylamide (DIMAPA quat).

Preferred radically polymerizable cationic monomers according to general formula (II) include quaternized dialkylaminoalkyl (meth)acrylates or dialkylaminoalkyl(meth)acrylamides with 1 to 3 C atoms in the alkyl or alkylene groups, more preferably the methyl chloride-quaternized ammonium salt of dimethylamino methyl(meth)acrylate, dimethylamino ethyl(meth)acrylate, dimethylamino propyl(meth)acrylate, diethylamino methyl(meth)acrylate, diethylamino ethyl-(meth)acrylate, diethylamino propyl(meth)acrylate, dimethylamino methyl(meth)acrylamide, dimethylamino ethyl(meth)acrylamide, dimethylamino propyl(meth)acrylamide, diethylamino methyl(meth)acrylamide, diethylamino ethyl(meth)acrylamide, diethylamino propyl(meth)-acrylamide.

Quaternized dimethylaminoethyl acrylate and dimethylaminopropylacrylamide are particularly preferred. Quaternization may be effected using dimethyl sulfate, diethyl sulfate, methyl chloride or ethyl chloride. In a preferred embodiment, monomers are quaternized with methyl chloride.

In a preferred embodiment, the polymeric dispersant is a homopolymer of trimethylammonium-propyl acrylamide (DIMAPA quat).

When the polymeric dispersant is a copolymer, it is preferably derived from at least one cationic monomer in combination with at least one non-ionic monomer.

Suitable non-ionic monomers include radically polymerizable non-ionic monomers according to general formula (I). Examples of radically polymerizable non-ionic monomers according to general formula (I) include (meth)acrylamide, N-methyl (meth)acrylamide, N-isopropyl(meth)-acrylamide or N,N-substituted (meth)acryl amides such as N,N-dimethyl(meth)acrylamide, N,N-diethyl(meth)acrylamide, N-methyl-N-ethyl(meth)acrylamide or N-hydroxyethyl(meth)-acrylamide.

Further suitable non-ionic monomers include non-ionic amphiphilic monomers according to general formula (III) 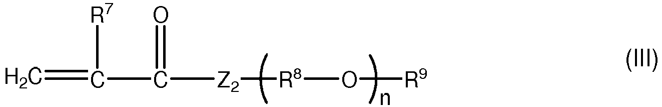 wherein
Z₂ means O, NH or NR⁶ with R⁶ being C₁-C₃-alkyl,
R⁷ means hydrogen or C₁-C₃-alkyl,
R⁸ means C₂-C₆-alkylene,
R⁹ means hydrogen, C₈-C₃₂-alkyl, C₈-C₃₂-aryl and/or C₈-C₃₂-aralkyl, and
n means an integer between 1 and 50, preferably 1 and 20.

Examples of amphiphilic monomers of general formula (III) include reaction products of (meth)acrylic acid and polyethylene glycols (10 to 50 ethylene oxide units), which are etherified with a fatty alcohol, or the corresponding reaction products with (meth)acrylamide.

In a preferred embodiment, the polymeric dispersant is substantially linear, i.e. is not derived from monomer mixtures containing cross-linkers.

In another preferred embodiment, the polymeric dispersant is cross-linked. Examples of suitable cross-linkers are known to the skilled person.

Preferably, the cross-linked polymeric dispersant is derived from a monomer composition containing 0.0001 to 1.25 wt.-% of one or more preferably ethylenically unsaturated cross-linkers, preferably 0.0001 to 1.0 wt.-%, more preferably 0.0001 to 0.5 wt.-%, still more preferably 0.0001 to 0.1 wt.-%, yet more preferably 0.0001 to 0.05 wt.-%, most preferably and in particular 0.0001 to 0.02 wt.-%, based on the total weight of monomers.

The reaction mixture may contain additional dispersant components in combination with the polymeric dispersant. In a preferred embodiment, the reaction mixture is aqueous and may contain additional water-soluble dispersant components in combination with the polymeric dispersant. Under these circumstances, the weight ratio of the polymeric dispersant to said additional water-soluble dispersant components is preferably within the range of from 1 : 0.01 to 1 : 0.5, preferably 1 : 0.01 to 1 : 0.3. By way of example, cellulose derivatives, polyvinyl acetates, starch, starch derivatives, dextrans, polyvinylpyrrolidones, polyvinylpyridines, polyethyleneimines, polyamines, polyvinylimidazoles, polyvinylsuccinimides, polyvinyl-2-methylsuccinimides, polyvinyl-1,3-oxazolidin-2-ones, polyvinyl-2-methylimidazolines and/or the respective copolymers thereof with maleic acid, maleic anhydride, fumaric acid, itaconic acid, itaconic anhydride, (meth)acrylic acid, salts of (meth)acrylic acid and/or (meth)acrylamide compounds may be mentioned as additional water-soluble dispersant components.

Besides the polymeric dispersant, the reaction mixture comprises a monomer composition. The monomer composition in turn comprises radically polymerizable monomers.

In a preferred embodiment, the radically polymerizable monomers comprise a radically polymerizable non-ionic monomer according to general formula (I); and/or a radically polymerizable cationic monomer according to general formula (II).

Optionally, the monomer composition may further comprise a cross-linker, preferably an ethylenically unsaturated cross-linker; and/or a hydrophobic monomer, preferably a hydrophobic (meth)acrylic acid C₄₋₁₈-alkyl ester; and/or an ethylenically unsaturated monomer.

In a preferred embodiment, the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide.

In another preferred embodiment, the radically polymerizable monomers comprise a radically polymerizable cationic monomer according to general formula (II) which is selected from the group consisting of trimethylammonium-C₂-C₆-alkyl(meth)acrylate halides, and trimethylammonium-C₂-C₆-alkyl(meth)acrylamide halides.

In a preferred embodiment, the monomer composition comprises
(a) at least 5 wt.-%, preferably at least 20 wt.-% of a radically polymerizable non-ionic monomer according to general formula (I);
(b) at least 5 wt.-%, preferably at least 15 wt.-%, more preferably at least 20 wt.-% or 25 wt.-%; preferably 10 to 30 wt.-% or 40 to 60 wt.-%, more preferably 15 to 25 wt.-% or 23 to 32 wt.-% or 45 to 55 wt.-%, of a radically polymerizable cationic monomer according to general formula (II);
(c) optionally, up to 1.25 wt.-% of a preferably ethylenically unsaturated cross-linker;
(d) optionally, up to 1.25 wt.-% of a hydrophobic (meth)acrylic acid C₄₋₁₈-alkyl ester; and
(e) optionally, further ethylenically unsaturated monomers;
all percentages being based on the total molar amount of monomers.

In this regard the sum of the values in wt.-% needs not to amount to 100 wt.-%, since further ethylenically unsaturated monomers (e) may be contained in the monomer composition, i.e. in the reaction mixture, which have to be taken into account when determining the total amount of monomers. Preferably, however, the monomer composition consists of monomers (a) and (b) so that the sum of the two values in wt.-% amounts to 100 wt.-%, i.e. no further monomers are present.

The monomer composition contains at least 5 wt.-%, preferably at least 20 wt.-%, preferably at least 25 wt.-%, more preferably at least 30 wt.-%, still more preferably at least 35 wt.-%, yet more preferably at least 40 wt.-%, most preferably at least 45 wt.-% and in particular at least 50 wt.-% of a radically polymerizable non-ionic monomer according to general formula (I), based on the total molar amount of all monomers.

In a preferred embodiment, the monomer composition contains 20 to 60 wt.-%, preferably 40±15 wt.-%, more preferably 40±12 wt.-%, still more preferably 40±9 wt.-%, yet more preferably 40±7 wt.-%, most preferably 40±6 wt.-% and in particular 40±5 wt.-% of a radically polymerizable non-ionic monomer according to general formula (I), based on the total molar amount of all monomers. In another preferred embodiment, the monomer composition contains 30 to 70 wt.-%, preferably 50±15 wt.-%, more preferably 50±12 wt.-%, still more preferably 50±9 wt.-%, yet more preferably 50±7 wt.-%, most preferably 50±6 wt.-% and in particular 50±5 wt.-% of a radically polymerizable non-ionic monomer according to general formula (I), based on the total molar amount of all monomers. In still another preferred embodiment, the monomer composition contains 50 to 90 wt.-%, preferably 73±15 wt.-%, more preferably 73±12 wt.-%, still more preferably 73±9 wt.-%, yet more preferably 73±7 wt.-%, most preferably 73±6 wt.-% and in particular 73±5 wt.-% of a radically polymerizable non-ionic monomer according to general formula (I), based on the total molar amount of all monomers. In yet another preferred embodiment, the monomer composition contains 60 to 95 wt.-%, preferably 80±15 wt.-%, more preferably 80±12 wt.-%, still more preferably 80±9 wt.-%, yet more preferably 80±7 wt.-%, most preferably 80±6 wt.-% and in particular 80±5 wt.-% of a radically polymerizable non-ionic monomer according to general formula (I), based on the total molar amount of all monomers.

Preferably, the radically polymerizable non-ionic ethylenically unsaturated monomer according to formula (I) is water-soluble.

Preferably, the radically polymerizable non-ionic monomer according to formula (I) is selected from the group consisting of (meth)acrylamide, N-methyl(meth)acrylamide, N-isopropyl(meth)acrylamide, N,N-dimethyl(meth)acrylamide, N,N-diethyl(meth)acrylamide, N-methyl-N-ethyl(meth)acrylamide and N-hydroxyethyl(meth)acrylamide. Acrylamide is particularly preferred.

The monomer composition further contains at least 5 wt.-%, preferably at least 20 wt.-%, preferably at least 25 wt.-%, more preferably at least 30 wt.-%, still more preferably at least 35 wt.-%, yet more preferably at least 40 wt.-%, most preferably at least 45 wt.-% and in particular at least 50 wt.-% of a radically polymerizable cationic monomer according to general formula (II), as defined supra, based on the total molar amount of all monomers.

In a preferred embodiment, the monomer composition contains 40 to 80 wt.-%, preferably 60±15 wt.-%, more preferably 60±12 wt.-%, still more preferably 60±9 wt.-%, yet more preferably 60±7 wt.-%, most preferably 60±6 wt.-% and in particular 60±5 wt.-% of a radically polymerizable cationic monomer according to general formula (II), based on the total molar amount of all monomers. In another preferred embodiment, the monomer composition contains 30 to 70 wt.-%, preferably 50±15 wt.-%, more preferably 50±12 wt.-%, still more preferably 50±9 wt.-%, yet more preferably 50±7 wt.-%, most preferably 50±6 wt.-% and in particular 50±5 wt.-% of a radically polymerizable cationic monomer according to general formula (II), based on the total molar amount of all monomers. In still another preferred embodiment, the monomer composition contains 10 to 50 wt.-%, preferably 27±15 wt.-%, more preferably 27±12 wt.-%, still more preferably 27±9 wt.-%, yet more preferably 27±7 wt.-%, most preferably 27±6 wt.-% and in particular 27±5 wt.-% of a radically polymerizable cationic monomer according to general formula (II), based on the total molar amount of all monomers. In yet another preferred embodiment, the monomer composition contains 12 to 40 wt.-%, preferably 20±8 wt.-%, more preferably 20±7 wt.-%, still more preferably 20±6 wt.-%, yet more preferably 20±5 wt.-%, most preferably 20±4 wt.-% and in particular 20±3 wt.-% of a radically polymerizable cationic monomer according to general formula (II), based on the total molar amount of all monomers.

Preferably, the radically polymerizable cationic monomer according to general formula (II) is water-soluble.

Preferably, the radically polymerizable cationic monomer according to general formula (II) is an amide (Z₁ = NH), e.g., trimethylammoniumalkyl(meth)acrylamide halides, particularly dimethylaminopropyl acrylamide quaternized with methylchloride (DIMAPA quat).

More preferably, however, the radically polymerizable cationic monomer according to general formula (II) is an ester (Z₁ = O), e.g., trimethylammoniumalkyl(meth)acrylate halides, particularly dimethylaminoethyl (meth)acrylate quaternized with methylchloride (ADAME quat.). Preferably, the radically polymerizable cationic monomer according to general formula (II) is selected from the group consisting of methyl chloride quaternized ammonium salts of dimethylaminomethyl(meth)acrylate, dimethylaminoethyl(meth)acrylate, dimethylaminopropyl(meth)acrylate, dimethylaminomethyl(meth)acrylamide, dimethylaminoethyl(meth)acrylamide and dimethylaminopropyl(meth)acrylamide.

Preferably, the radical reactivity ratios of the radically polymerizable cationic monomer according to general formula (II) r₁ and of the radically polymerizable non-ionic monomer according to general formula (I) r₂ are each within the range of from 0.01 to 100, more preferably 0.02 to 50, still more preferably 0.05 to 20, most preferably 0.1 to 10 and in particular 0.2 to 5. In this context, r₁ is defined as the ratio of two propagation constants involving a radical of the cationic ethylenically unsaturated monomer: The ratio always compares the propagation constant for the monomer of the same type adding to the radical (k₁₁) relative to the propagation constant for the addition of the comonomer (k₁₂), i.e., r₁ = k₁₁/k₁₂. In analogy, r₂ = k₂₂/k₂₁. For further details it can be referred e.g. to Paul C. Hiemenz, Polymer Chemistry, Marcel Dekker New York, 1984, Chapter 7.2.

In a preferred embodiment, the radically polymerizable non-ionic monomer according to general formula (I) is acrylamide and/or the radically polymerizable cationic monomer according to general formula (II) is ADAME quat.

When the polymeric dispersant is also derived from a cationic ethylenically unsaturated monomer, said cationic ethylenically unsaturated monomer may be different from or identical with the radically polymerizable cationic monomer according to general formula (II) contained in the monomer composition, i.e. in the reaction mixture. Preferably, both monomers differ from one another so that the repetition units of the polymer that is obtained in step (C) differ from the repetition units of the polymeric dispersant. Thus, the polymeric dispersant and the polymer that is obtained in step (C) preferably differ from each other, said difference possibly involving physical variables such as different molecular weight and/or chemical structure, as well as different monomer composition.

The monomer composition may contain up to 1.25 wt.-% of one or more preferably ethylenically unsaturated cross-linkers, based on the total weight of monomers.

In a preferred embodiment, the reaction mixture contains no cross-linker.

Cross-linkers are known to the skilled artisan. Some aspects have already been described above in connection with the cross-linked polymeric dispersant. These aspects shall also apply to the cross-linkers of the cross-linked polymer that is obtained in step (C) and *vice versa.*

According to the invention, the cross-linker contains preferably ethylenically unsaturated groups that are radically polymerizable. Preferably, the ethylenically unsaturated cross-linker contains 2, 3, 4 or 5 ethylenically unsaturated groups.

The monomer composition may optionally contain up to 1.25 wt.-% of one or more preferably ethylenically unsaturated cross-linkers, preferably 0.0001 to 1.0 wt.-%, more preferably 0.0001 to 0.5 wt.-%, still more preferably 0.0001 to 0.1 wt.-%, yet more preferably 0.0001 to 0.05 wt.-%, most preferably and in particular 0.0001 to 0.02 wt.-%, based on the total weight of monomers.

A skilled person realizes that the total amount of cross-linker does not necessarily have to be present from the very beginning of the polymerization reaction. It may also be added in the course of the polymerization reaction. If the cross-linker itself does not bear any radically polymerizable groups, i.e. if cross-linking is based on another chemistry, the entire amount of the cross-linker may even be added subsequently to the radical polymerization reaction. In this regard, the cross-linker may be added to the reaction mixture after step (C), provided that a suitable after-reaction takes place such that the thus resulting polymer dispersion contains a cross-linked polymer.

Therefore, in a preferred embodiment, the method for manufacturing a polymer dispersion comprises the steps of
(A) preparing a reaction mixture comprising
   (i) a polymeric dispersant; and
   (ii) a monomer composition comprising radically polymerizable monomers comprising
      - 0 to 1.25 wt.-% of a hydrophobic (meth)acrylic acid C₄₋₁₈-alkyl ester, based on the total weight of monomers; and
      - optionally, further ethylenically unsaturated monomers;
(B) optionally, heating the reaction mixture to a temperature above room temperature;
(C) polymerizing the radically polymerizable monomers by adding to the reaction mixture sequentially or simultaneously
   (iii) a predetermined amount of a redox initiator system comprising an oxidizing agent and a reducing agent;
   (iv) a predetermined amount of a first auxiliary radical initiator; and
   (v) a predetermined amount of a second auxiliary radical initiator;
   wherein the second initiator is neither identical to the oxidizing agent which is comprised in the redox initiator system, nor to the first radical initiator;
   with the proviso that at least a portion of said predetermined amount of the redox initiator system, at least a portion of said predetermined amount of the first auxiliary radical initiator, and at least a portion of said predetermined amount of the second auxiliary radical initiator is added to the reaction mixture before 90 mol.-% of the radically polymerizable monomers, which were originally contained in the monomer composition, are polymerized,
   such that a prepolymer is obtained and
(D) optionally, reducing the residual monomer content by adding to the reaction mixture
   - the remainder of said predetermined amount of the redox initiator system, the remainder of said predetermined amount of the first auxiliary radical initiator, and/or the remainder of said predetermined amount of the second auxiliary radical initiator; and/or
   - a third auxiliary radical initiator; and
(E) adding 0.0001 to 1.25 wt.-% of one or more cross-linkers, based on the total weight of monomers employed in step (A) to the thus obtained prepolymer; and
(F) subjecting the prepolymer to a cross-linking reaction (after-reaction);
such that the resulting polymer dispersion contains a cross-linked polymer.

In this regard, the term "momomer composition" shall also include compositions comprising the prepolymers and the cross-linker prior to effecting the cross-linking reaction.

The monomer composition may contain up to 1.25 wt.-% of one or more hydrophobic (meth)acrylic acid C₄₋₁₈-alkyl esters, based on the total weight of monomers. Preferably, however, the monomer composition does not contain any hydrophobic (meth)acrylic acid C₄₋₁₈-alkyl esters, such as butyl acrylate, butyl methacrylate, lauryl acrylate, lauryl methacrylate, and the like.

Preferably, the monomer composition does not contain any hydrophobic monomers. In this regard, hydrophobic monomers are preferably defined as monomers that are not water soluble. Thus, the monomer composition preferably does not contain any monomers having a solubility in pure water at ambient temperature of below 10 g l⁻¹, more preferably below 25 g l⁻¹, still more preferably below 50 g l⁻¹, yet more preferably below 100 g l⁻¹, most preferably below 250 g l⁻¹ and in particular below 500 g l⁻¹.

Preferably, the monomer composition does not contain any hydrophobic monomers according to general formula (V) 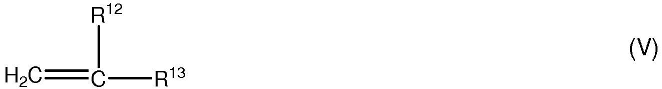 where
R¹² is hydrogen or C₁₋₅-alkyl; and
R¹³ is alkyl, cycloalkyl, aryl or aralkyl each having 1 to 20 carbon atoms; or -C(=O)-Z₀-R¹⁴ wherein Z₀ is O, NH or NR¹⁴ with R¹⁴ being alkyl, cycloalkyl, aryl or aralkyl each having 1 to 20 carbon atoms.

The monomer composition may contain further ethylenically unsaturated monomers that are radically polymerizable. Preferably, however, the monomer composition does not contain such monomers, i.e. preferably consists of components (a) and (b), and optionally (c) and (d), particularly preferably consists of components (a) and (b).

In a preferred embodiment of the reaction mixture according to the invention,
- the polymeric dispersant is a cationic polymer derived from at least one monomer selected from trimethylammoniumalkyl(meth)acrylate halides and trimethylammonium-alkyl(meth)acrylamide halides; and/or
- the monomer composition comprises a radically polymerizable cationic monomer according to general formula (II) which is selected from the group consisting of trimethylammoniumalkyl(meth)acrylate halides, trimethylammoniumalkyl(meth)acrylamide halides and diallyldialkylammonium halides; and/or
- the monomer composition comprises a radically polymerizable non-ionic monomer according to general formula (I) which is (meth)acrylamide.

In a particularly preferred embodiment of the reaction mixture according to the invention,
- the polymeric dispersant is derived from one or more monomers comprising an (alk)acrylamidoalkyl trialkyl ammonium halide;
- the monomer composition comprises a radically polymerizable cationic monomer according to general formula (II) which is an (alk)acryloyloxyalkyl trialkyl ammonium halide; and
- the monomer composition comprises a radically polymerizable non-ionic monomer according to general formula (I) which is an (alk)acrylamide.

The method according to the invention includes the step of subjecting a reaction mixture to a free radical polymerization reaction. Usually, before the free radical polymerization reaction is initiated, the reaction mixture is prepared from its components (i) and (ii), i.e. from the polymeric dispersant and the monomer composition.

The preparation of reaction mixtures is known to the skilled person. The components may be added simultaneously or consecutively. The components may be added by conventional means, e.g. by pouring or dropping liquids, by dosing powders, and the like.

In principle, it is not necessary that the entire amount of each component is initially present when the reaction mixture is prepared. Alternatively, partial dispersion of the monomers can be effected at the beginning of the polymerization, the remainder of the monomers being added as metered portions or as a continuous feed distributed over the entire course of polymerization. For example, only a certain portion of a particular component, e.g., only 70 wt.-% of the radically polymerizable cationic monomer according to general formula (II), may be initially employed, and thereafter, possibly in the course of the polymerization reaction, the remainder of said particular component, e.g., the residual 30 wt.-% of the radically polymerizable cationic monomer according to general formula (II), is employed.

In a preferred embodiment of the method according to the invention, before and/or after step (C), a salt, more preferably a water-soluble salt is added in quantities of 0.1 to 5.0 wt.-%, based on the total weight of the reaction mixture.

Ammonium, alkali metal and/or alkaline earth metal salts, preferably ammonium, sodium, potassium, calcium and/or magnesium salts, can be used as water-soluble salts. Such salts can be salts of an inorganic acid or of an organic acid, preferably of an organic carboxylic acid, sulfonic acid, phosphonic acid, or of a mineral acid. The water-soluble salts are preferably salts of an aliphatic or aromatic mono-, di-, polycarboxylic acid, of a hydroxycarboxylic acid, preferably of acetic acid, propionic acid, citric acid, oxalic acid, succinic acid, malonic acid, adipic acid, fumaric acid, maleic acid or benzoic acid, or sulfuric acid, hydrochloric acid or phosphoric acid. Very particularly preferably, sodium chloride, ammonium sulfate and/or sodium sulfate are used as water-soluble salts.

The salts can be added before, during or after polymerization, polymerization preferably being carried out in the presence of a water-soluble salt.

After the reaction mixture has been prepared in step (A), it is subjected to a (free) radical polymerization reaction in step (C); i.e. the monomer composition comprising radically polymerizable monomers is polymerized in the presence of the polymeric dispersant, thereby yielding the polymer dispersed in the polymer dispersion.

The skilled person knows how to radically polymerize monomers in a reaction mixture. The skilled person principally knows how to modify the amount and type of the initiator in order to modify the properties of the resultant polymer product, e.g., its average molecular weight.

Typically, the polymerization reaction is carried out in the presence of one ore more conventional polymerization initiators. Radicals may be formed, e.g., upon thermally induced or photochemically induced homolysis of single bonds or redox reactions.

In the following, the term "initiator" shall comprise all compounds as well as combinations of compounds which are capable of generating radicals by thermal and/or photochemical induction and/or by redox reactions.

The method according to the invention may comprise adding a photoinitiator to the reaction mixture. Photoinitiators preferably are capable of generating free radicals at a wavelength between 200 and 800 nm. Suitable examples for photoinitiators include α-diketones, monoketals of α-diketones or ketoaldehydes, acyloins and their corresponding ethers, chromophore-substituted halomethyl-S-triazines, chromophore-substituted halomethyl-oxadiazoles, cumene hydroperoxide, benzoin ethyl ether, 2,2-dimethoxy-2-phenyl acetophenone, 1-hydroxy cyclohexyl-1-phenyl ketone (Irgacure-184)and bis (2,4,6-trimethyl benzoyl)phenyl phosphine (Irgacure-819). Photoinitiators may optionally be combined with a photochemical sensitizer. Examples of suitable photochemical sensitizers include ketones, dyes, porphyrins and aromatic polycyclic hydrocarbons.

Preferably, in the method according to the invention no photoinitiator is added to the reaction mixture.

Preferred radical initiators comprise organic and inorganic compounds which decompose into radicals like peroxides and azo-compounds. Organic peroxo compounds are e.g. hydroperoxides, dialkylperoxide, diacylperoxide and peresters. Many organic peroxo compounds are also soluble in organic solvents and monomers and therefore may be used in solvent, polymerization, bulk polymerization and suspension polymerization. Inorganic initiators are especially suited for polymerization in aqueous phase, suspension or emulsion.

The initiation process can be speeded up by the addition of acids that are able to dissociate into radicals, such as sulphuric acid or nitric acid. Other catalysts could be used as well to enhance the performance of the redox initiator system, such as hydroquinone.

Redox initiator systems which are characterized by very short induction periods and relatively low energy activation comprise an oxidizing and a reducing agent which react with each other forming a radical. As oxidizing agents, mainly organic and inorganic peroxo-compounds are used. Suitable reducing agents include low-valent metal ions or metal free compounds which are easy to oxidize, e.g. sulfur containing compounds. Other redox initiator systems comprise a peroxo compound, metal ions (e.g. Fe²⁺) and a further reducing agent (e.g. hydrogen sulfite), wherein the Fe²⁺ reacts with the peroxo compound forming Fe³⁺ which is in turn reduced again by the reducing agent (e.g. hydrogen sulfite).

If the redox initiator system contains a metal ion, the metal is preferably present as an oxidizable complex ion in the lower oxidation state of a redox system. Preferred metals are transition metals from groups V to VIII, I and II. Preferred metal-redox systems include Cu⁺/Cu²⁺, Cu⁰/Cu⁺, Fe⁰/Fe²⁺, Fe²⁺/Fe³⁺, Ru²⁺/Ru³⁺, Ru³⁺/Ru⁴⁺, Os²⁺/Os³⁺, Vⁿ⁺/V⁽ⁿ⁺¹⁾⁺, Cr²⁺/Cr³⁺, Co⁺/Co²⁺, Co²⁺/Co³⁺, Ni⁰/Ni⁺, Ni⁺/Ni²⁺, Ni²⁺/Ni³⁺, Mn⁰/Mn²⁺, Mn²⁺/Mn³⁺, Mn³⁺/Mn⁴⁺ or Zn⁺/Zn²⁺.

Redox initiator systems are mainly used in aqueous phase for polymerizations in solution, suspension or emulsion.

The redox initiator system of the invention may consist of more than one oxidizing agent and more than one reducing agent.

Preferably, the redox initiator system of the invention is water soluble.

Examples for suitable oxidizing agents which are contained in the redox initiator system include persulfates such as sodium persulfate, potassium persulfate or ammonium persulfate; peroxydiphosphates, hydrogen peroxide; t-butyl hydroperoxide, cumene hydroperoxide; and ceric salts, chlorites, hypochlorites. Preferably, the oxidizing agents have a redox potential of from 0.6 to 2.5 V, e.g. persulfates (2.01 V), hydrogen peroxide (1.14 V), chlorites (0.66 V), and hypochlorites (0.89 V). Further suitable oxidizing agents include those organic peroxides and inorganic peroxides which are described in connection with the first auxiliary radical initiator hereinbelow.

Persulfate (i.e. peroxodisulfate) forms radicals at temperatures above 30°C and therefore may also be used without additional reducing agent.

Suitable reducing agents which are contained in the redox initiator system include sodium, potassium or ammonium bisulfite; sodium, potassium or ammonium sulfite; hydrogensulfites; thiosulfates; amines; acids and their salts, such as ascorbic acid and erythorbic acid. Preferably, the reducing agent has a redox potential of from -2 to 0.3 V, e.g. sulfites (-1.12 V), hydrogensulfites (-0.08 V), thiosulfates (-0.017 V), ascorbic acid (0.127 V), erythorbic acid (0.127 V) and their salts (0.127 V).

Examples of suitable redox initiator systems include, but are not limited to, a combination of persulfate (e.g. sodium, potassium or ammonium salts of persulfate) and a reducing agent (e.g. sodium, potassium or ammonium salts of hydrogen metasulfite, hydrogen sulfite and bisulfite), e.g. a combination of sodium persulfate and sodium bisulfate, a combination of sodium persulfate and ascorbic acid; a combination of an organic peroxide and tertiary amine, e.g. a combination of benzoyl peroxide and dimethylaniline, a combination of cumene hydroperoxide and anilines; and a combination of an organic peroxide and a transition metal, e.g. a combination of cumene hydroperoxide and cobalt naphthate, or a combination of cumene hydroperoxide and iron (II) sulfate. Further examples include a combination of cumene hydroperoxide and sodium metabisulfite; a combination of hydrogen peroxide and ascorbic acid; a combination of ammonium persulfate and ferric sulfate.

In a preferred embodiment, the relative weight amount of the oxidizing agent is in the range of from 0.0001 to 0.1 wt.-%, more preferably 0.0003 to 0.05 wt.-%, still more preferably 0.0004 to 0.01 wt.-%, yet more preferably 0.0006 to 0.008 wt.-%, most preferably 0.0008 to 0.005 wt.-%, and in particular 0.001 to 0.003 wt.-% relative to the total weight of the reaction mixture. In another preferred embodiment, the relative weight amount of the oxidizing agent is in the range of from 0.0001 to 0.1 wt.-%, more preferably 0.0005 to 0.08 wt.-%, still more preferably 0.001 to 0.05 wt.-%, yet more preferably 0.002 to 0.01 wt.-%, most preferably 0.003 to 0.008 wt.-%, and in particular 0.004 to 0.006 wt.-% relative to the total weight of the reaction mixture.

In a preferred embodiment, the amount of the oxidizing agent is in the range of from 0.0001 to 1 wt.-%, more preferably 0.0005 to 0.1 wt.-%, still more preferably 0.0008 to 0.010 wt.-%, yet more preferably 0.0030 to 0.050 wt.-%, most preferably 0.0050 to 0.020 wt.-%, and in particular 0.0070 to 0.013 wt.-% relative to the weight of the monomer composition. In another preferred embodiment, the amount of the oxidizing agent is in the range of from 0.0001 to 1 wt.-%, more preferably 0.0005 to 0.5 wt.-%, still more preferably 0.001 to 0.1 wt.-%, yet more preferably 0.005 to 0.08 wt.-%, most preferably 0.008 to 0.05 wt.-%, and in particular 0.010 to 0.035 wt.-% relative to the weight of the monomer composition.

In a preferred embodiment, the molar amount of the oxidizing agent is in the range of from 0.001 to 1 ppm, more preferably 0.005 to 0.5 ppm, still more preferably 0.008 to 0.1 ppm, yet more preferably 0.015 to 0.07 ppm, most preferably 0.022 to 0.06 ppm, and in particular 0.030 to 0.05 ppm relative to the molar amount of the radically polymerizable monomers. In another preferred embodiment, the molar amount of the oxidizing agent is in the range of from 0.001 to 1 ppm, more preferably 0.005 to 0.8 ppm, still more preferably 0.010 to 0.50 ppm, yet more preferably 0.05 to 0.30 ppm, most preferably 0.07 to 0.20 ppm, and in particular 0.08 to 0.15 ppm relative to the molar amount of the radically polymerizable monomers.

In a preferred embodiment, the relative weight amount of the reducing agent is in the range of from 0.0001 to 1 wt.-%, more preferably 0.0005 to 0.1 wt.-%, still more preferably 0.0008 to 0.01 wt.-%, yet more preferably 0.0010 to 0.008 wt.-%, most preferably 0.0015 to 0.007 wt.-%, and in particular 0.0020 to 0.006 wt.-% relative to the total weight of the reaction mixture. In another preferred embodiment, the relative weight amount of the reducing agent is in the range of from 0.00001 to 0.01 wt.-%, more preferably 0.00005 to 0.001 wt.-%, still more preferably 0.0001 to 0.0007 wt.-%, yet more preferably 0.0003 to 0.0004 wt.-%, most preferably 0.0004 to 0.0003 wt.-%, and in particular 0.0005 to 0.00015 wt.-% relative to the total weight of the reaction mixture.

In a preferred embodiment, the amount of the reducing agent is in the range of from 0.001 to 1 wt.-%, more preferably 0.005 to 0.5 wt.-%, still more preferably 0.008 to 0.1 wt.-%, yet more preferably 0.010 to 0.07 wt.-%, most preferably 0.012 to 0.04 wt.-%, and in particular 0.015 to 0.035 wt.-% relative to the weight of the monomer composition. In another preferred embodiment, the amount of the reducing agent is in the range of from 0.0001 to 0.1 wt.-%, more preferably 0.0003 to 0.05 wt.-%, still more preferably 0.0005 to 0.01 wt.-%, yet more preferably 0.0010 to 0.009 wt.-%, most preferably 0.0015 to 0.008 wt.-%, and in particular 0.0020 to 0.007 wt.-% relative to the weight of the monomer composition.

In a preferred embodiment, the molar amount of the reducing agent is in the range of from 0.0001 to 1 ppm, more preferably 0.0005 to 0.5 ppm, still more preferably 0.001 to 0.1 ppm, yet more preferably 0.005 to 0.07 ppm, most preferably 0.010 to 0.05 ppm, and in particular 0.020 to 0.04 ppm relative to the molar amount of the radically polymerizable monomers. In another preferred embodiment, the molar amount of the reducing agent is in the range of from 0.0001 to 10 ppm, more preferably 0.001 to 1 ppm, still more preferably 0.005 to 0.50 ppm, yet more preferably 0.01 to 0.30 ppm, most preferably 0.05 to 0.20 ppm, and in particular 0.08 to 0.15 ppm relative to the molar amount of the radically polymerizable monomers.

In a preferred embodiment, the amount of the reducing agent is adjusted to control the weight average molecular weight M_{w} of the polymer that is obtained in step (C).

In a preferred embodiment, the molar amounts of the oxidizing agent and the reducing agent relative to each other are in the range of from 10:1 to 1:10, more preferably 8:1 to 1:5, still more preferably 6:1 to 1:3, yet more preferably 4:1 to 1:2, most preferably 3:1 to 1:1.5 and in particular 2:1 to 1:1.2.

In a preferred embodiment, the redox initiator system does not contain any transition metal.

Preferably, the redox initiator system which is added in step (C) comprises a persulfate and/or a bisulfite.

In a particularly preferred embodiment of the method according to the invention, the redox initiator system which is added in step (C) comprises a combination of sodium persulfate and sodium bisulfite.

In addition to the redox initiator system, a first auxiliary radical initiator which is different from the redox initiator system is added in step (C) of the method according to the invention.

For the purpose of specification, the term "auxiliary radical initiator" shall refer to any compound as well as combinations of compounds which are capable of generating radicals by thermal and/or photochemical induction and/or by redox reactions and which are added to the reaction mixture in addition to the redox initiator system. Thus, the redox initiator system, the first auxiliary radical initiator and the second auxiliary radical initiator may be alternatively referred to as "initiator 1", "initiator 2" and "initiator 3", respectively.

Preferably, the first auxiliary radical initiator is water soluble.

The first auxiliary radical initiator forms radicals by thermal induction, preferably at temperatures above 20°C, more preferably above 25°C, still more preferably above 30°C, yet more preferably above 35°C, most preferably above 40°C and in particular above 45°C.

The first auxiliary radical initiator is preferably selected from nitrogenous compounds, more preferably azo-compounds. Suitable azo-compounds are those wherein the azo group is preferably substituted by tertiary carbon atoms which preferably carry alkyl groups and/or nitrile or ester groups.

Suitable examples for the first auxiliary radical initiator include
(i) water soluble and water insoluble azo-compounds such as 2,2'-azobis(2-amidinopropane) dihydrochloride (Vazo 56 or V-50), 2,2'-azobis(4-methoxy-2,4-dimethylvaleronitrile) (Vazo 33), 2,2'-azobis(2,4-dimethylvaleronitrile) (Vazo 52), 2,2'-azobis(isobutyronitrile) (Vazo 64), 2,2'-azobis-2-methylbutyronitrile (Vazo 67), 1,1-azobis(1-cyclohexanecarbonitrile) (Vazo 88), 2,2'-azobis[2-(2-imidazolin-2-yl) propane] dihydrochloride (VA-044), 2,2'-azobis(2-cyclopropylpropionitrile) and 2,2'-azobis(methylisobutyrate) (V-601), 2,2'-azobis[2-(2-imidazolin-2-yl)propane] (VA-61), 2,2'-azobis{2-[1-(2-hydroxyethyl)-2-imidazolin-2-yl]propane}dihydrochloride (V-60), and 2,2'-azobis[2-methyl-N-(2-hydroxyethyl)propionamide] (VA-086) (which may be obtained from DuPont or Wako Pure Chemical Industries Ltd.); 2,2'-azobis(methyl isobutyrate), 4,4'-azobis-(4-cyanopentanoic acid), dimethyl 2,2'-azobisisobutyrate, 2,2'-azobis(isobutyramide) dihydrate, 2-phenylazo-2,4-dimethyl-4-methoxyvaleronitrile, 2-(carbamoylazo)isobutyronitrile, 2,2'-azobis(2,4,4-trimethylpentane), 2,2'-azobis(2-methylpropane), 2,2'-azobis(N,N'-dimethyleneisobutyramidine) in form of the free base or hydrochloride, 2,2'-azobis{2-methyl-N-[1,1-bis(hydroxymethyl)ethyl]propionamide}, and 2,2'-azobis{2-methyl-N-[1,1-bis(hydroxymethyl)-2-hydroxyethyl]propionamide; and
(ii) water soluble and water insoluble organic peroxides, such as t-butyl hydroperoxide, dit-butyl peroxide, t-butylperoxy pivalate, t-butyl peroxy isopropyl carbonate, benzoyl peroxide, dibenzoyl peroxide, 2,4-dichlorobenzoyl peroxide, benzoyl hydroperoxide, 2,5-dimethylhexyne-2,5-di-t-butylperoxide, 2,5-dimethylhexane-2,5-di-t-butylperoxide, di-tert-amyl peroxide, dicumyl peroxide, cumene hydroperoxide, isopropylbenzene peroxide, acetyl peroxide, diacetyl peroxide, t-butyl peracetate, isopropyl peroxycarbonate, diisopropyl peroxydicarbonate, lauroyl peroxide, dilauryl peroxide, decanoyl peroxide, diisononanoyl peroxide, didecanoyl peroxide, dioctanoyl peroxide, dicetyl peroxydicarbonate, di(4-t-butylcyclohexyl)peroxy dicarbonate (Perkadox 16S available from Akzo Nobel), di(2-ethylhexyl)peroxy dicarbonate, t-butylperoxy pivalate (Lupersol 11 available from Elf Atochem), t-butylperoxy-2-ethylhexanoate (Trigonox 21-C50 available from Akzo Nobel), acetyl cyclohexane sulphonyl peroxide, t-amyl perneodecanoate, t-butyl perneodecanoate, t-butyl perpivalate, t-amylperpivalate, bis(2,4-dichlorobenzoyl)peroxide, bis-(4-chlorobenzoyl)-peroxide, bis(2-methylbenzoyl)peroxide, disuccinic acid peroxide, t-butyl perisobutyrate, t-butyl permaleinate, 1,1-bis(t-butylperoxy)3,5,5-trimethylcyclohexane, 1,1-bis(t-butylperoxy)cyclohexane, t-butyl perisononaoate, 2,5-dimethylhexane 2,5-dibenzoate, t-amyl perbenzoate, t-butyl perbenzoate, 2,2-bis(t-butylperoxy)butane, 2,2 bis(t-butylperoxy)propane, 3-t-butylperoxy 3-phenylphthalide, α,α'-bis(t-butylperoxy isopropyl)benzene, 3,5-bis(t-butylperoxy)3,5-dimethyl 1,2-dioxolane, 3,3,6,6,9,9-hexamethyl 1,2,4,5-tetraoxa cyclononane, p-menthane hydroperoxide, pinane hydroperoxide, and diisopropylbenzene mono-α-hydroperoxide; and
(iii) inorganic peroxides, such as hydrogen peroxide, sodium peroxide, potassium peroxide, potassium persulfate and ammonium persulfate.

Preferably, the first auxiliary radical initiator is selected from the group consisting of 2,2'-azobis(2-amidinopropane) dihydrochloride (Vazo 56 or V-50), 2,2'-azobis[2-(2-imidazolin-2-yl) propane] dihydrochloride (VA-044), 2,2'-azobis(2-cyclopropylpropionitrile), 2,2'-azobis{2-[1-(2-hydroxyethyl)-2-imidazolin-2-yl]propane}dihydrochloride (V-60), 2,2'-azobis[2-(2-imidazolin-2-yl)propane] (VA-61) and 2,2'-azobis[2-methyl-N-(2-hydroxyethyl)propionamide] (VA-86).

In a particularly preferred embodiment, the first auxiliary radical initiator is 2,2'-azobis(2-amidinopropane) dihydrochloride (Vazo 56 or V-50).

In a preferred embodiment, the relative weight amount of the first auxiliary radical initiator is in the range of from 0.0001 to 1 wt.-%, more preferably 0.0005 to 0.1 wt.-%, still more preferably 0.0008 to 0.01 wt.-%, yet more preferably 0.0010 to 0.008 wt.-%, most preferably 0.0015 to 0.007 wt.-%, and in particular 0.0020 to 0.006 wt.-% relative to the total weight of the reaction mixture. In another preferred embodiment, the relative weight amount of the first auxiliary radical initiator is in the range of from 0.0001 to 1 wt.-%, more preferably 0.0005 to 0.1 wt.-%, still more preferably 0.001 to 0.08 wt.-%, yet more preferably 0.005 to 0.06 wt.-%, most preferably 0.008 to 0.04 wt.-%, and in particular 0.010 to 0.02 wt.-% relative to the total weight of the reaction mixture.

In a preferred embodiment, the amount of first auxiliary radical initiator is in the range of from 0.001 to 1 wt.-%, more preferably 0.005 to 0.5 wt.-%, still more preferably 0.008 to 0.1 wt.-%, yet more preferably 0.010 to 0.07 wt.-%, most preferably 0.012 to 0.04 wt.-%, and in particular 0.015 to 0.035 wt.-% relative to the weight of the monomer composition. In another preferred embodiment, the amount of first auxiliary radical initiator is in the range of from 0.001 to 1 wt.-%, more preferably 0.005 to 0.8 wt.-%, still more preferably 0.010 to 0.6 wt.-%, yet more preferably 0.030 to 0.4 wt.-%, most preferably 0.040 to 0.2 wt.-%, and in particular 0.050 to 0.1 wt.-% relative to the weight of the monomer composition.

In a preferred embodiment, the molar amount of first auxiliary radical initiator is in the range of from 0.01 to 10 ppm, more preferably 0.05 to 5 ppm, still more preferably 0.10 to 1 ppm, yet more preferably 0.15 to 0.7 ppm, most preferably 0.18 to 0.5 ppm, and in particular 0.20 to 0.4 ppm relative to the molar amount of the radically polymerizable monomers. In another preferred embodiment, the molar amount of first auxiliary radical initiator is in the range of from 0.001 to 1 ppm, more preferably 0.005 to 0.8 ppm, still more preferably 0.010 to 0.50 ppm, yet more preferably 0.015 to 0.30 ppm, most preferably 0.018 to 0.20 ppm, and in particular 0.02 to 0.15 ppm relative to the molar amount of the radically polymerizable monomers.

In addition to the redox initiator system and the first auxiliary radical initiator, a second auxiliary radical initiator is added in step (C) of the method according to the invention.

In a preferred embodiment, the second auxiliary radical initiator is able to form radicals by thermal decomposition as well as by redox reactions. For possible examples of the second auxiliary radical initiator, reference is also made to the redox initiator system and the first auxiliary radical initiator which are described in the sections hereinabove.

In the present method the second auxiliary radical initiator is neither identical to the oxidizing agent which is comprised in the redox initiator system, nor to the first auxiliary radical initiator.

The second auxiliary radical initiator is preferably an oxidizing agent, e.g. an azo-compound, a hydroperoxide, a peroxide or a persulfate. Suitable examples include t-butyl hydroperoxide, dibenzoyl peroxide, dilauroyl peroxide cumolhydro peroxide, di-t-butyl peroxide, hydrogen peroxide, t-butyl peroxide and acetyl peroxide.

Preferably, the second auxiliary radical initiator is an organic peroxide, more preferably a hydroperoxide and most preferably t-butyl hydroperoxide.

In a preferred embodiment, the relative weight amount of second auxiliary radical initiator is in the range of from 0.01 to 10 ppm, more preferably 0.05 to 5 ppm, still more preferably 0.08 to 1 ppm, yet more preferably 0.11 to 0.5 ppm, most preferably 0.13 to 0.35 ppm, and in particular 0.15 to 0.25 ppm relative to the total weight of the reaction mixture. In another preferred embodiment, the relative weight amount of second auxiliary radical initiator is in the range of from 0.01 to 10 ppm, more preferably 0.1 to 7 ppm, still more preferably 0.3 to 5 ppm, yet more preferably 0.5 to 3 ppm, most preferably 0.6 to 1 ppm, and in particular 0.65 to 0.85 ppm relative to the total weight of the reaction mixture.

In a preferred embodiment, the amount of second auxiliary radical initiator is in the range of from 0.01 to 10 ppm, more preferably 0.05 to 8 ppm, still more preferably 0.1 to 6 ppm, yet more preferably 0.5 to 4 ppm, most preferably 0.7 to 2 ppm, and in particular 0.9 to 1.3 ppm relative to the weight of the monomer composition. In another preferred embodiment, the amount of second auxiliary radical initiator is in the range of from 0.01 to 10 ppm, more preferably 1 to 8 ppm, still more preferably 2 to 7 ppm, yet more preferably 2.5 to 6 ppm, most preferably 3 to 5 ppm, and in particular 3.5 to 4.1 ppm relative to the weight of the monomer composition.

In a preferred embodiment, the molar amount of second auxiliary radical initiator is in the range of from 0.01 to 10 ppm, more preferably 0.05 to 5 ppm, still more preferably 0.10 to 1 ppm, yet more preferably 0.15 to 0.5 ppm, most preferably 0.18 to 0.4 ppm, and in particular 0.20 to 0.3 ppm relative to the molar amount of the radically polymerizable monomers. In another preferred embodiment, the molar amount of second auxiliary radical initiator is in the range of from 0.01 to 10 ppm, more preferably 0.1 to 7 ppm, still more preferably 0.50 to 4 ppm, yet more preferably 0.60 to 2 ppm, most preferably 0.70 to 1 ppm, and in particular 0.75 to 0.8 ppm relative to the molar amount of the radically polymerizable monomers.

In the method according to the invention, a combination of at least one redox initiator system and at least one auxiliary radical initiator is employed.

Preferably, in the method according to the invention, a combination consisting of one redox initiator system, a first auxiliary radical initiator and a second auxiliary radical initiator is added to the reaction mixture.

In a preferred embodiment of the method of the invention, the redox initiator system comprises a persulfate and/or a bisulfite and/or the first auxiliary radical initiator is an azo-compound and/or the secod auxiliary radical initiator is an organic peroxide.

In a particularly preferred embodiment of the method of the invention, the redox initiator system comprises sodium persulfate and sodium bisulfite, the first auxiliary radical initiator is 2,2'-azobis(2-amidinopropane) dihydrochloride and the secod auxiliary radical initiator is t-butyl hydroperoxide.

In a preferred embodiment of the method according to the invention, the total amount of initiator comprising the redox initiator system, the first auxiliary radical initiator and the second auxiliary radical initiator, is in the range of from 0.0001 to 1 wt.-%, more preferably 0.0005 to 0.5 wt.-%, still more preferably 0.001 to 0.09 wt.-%, yet more preferably 0.003 to 0.05 wt.-% or 0.005 to 0.05 wt.-%, most preferably 0.004 to 0.03 wt.-% or 0.010 to 0.035 wt.-%, and in particular 0.005 to 0.01 wt.-% or 0.015 to 0.025 wt.-% relative to the total weight of the reaction mixture.

In a preferred embodiment of the method according to the invention, the total amount of initiator comprising the redox initiator system, the first auxiliary radical initiator and the second auxiliary radical initiator, is in the range of from 0.001 to 10 wt.-%, more preferably 0.003 to 1.0 wt.-%, still more preferably 0.005 to 0.5 wt.-%, yet more preferably 0.007 to 0.1 wt.-%, most preferably 0.009 to 0.07 wt.-%, and in particular 0.01 to 0.05 wt.-% relative to the weight of the monomer composition. In another preferred embodiment of the method according to the invention, the total amount of initiator comprising the redox initiator system, the first auxiliary radical initiator and the second auxiliary radical initiator, is in the range of from 0.001 to 10 wt.-%, more preferably 0.01 to 1.0 wt.-%, still more preferably 0.03 to 0.8 wt.-%, yet more preferably 0.05 to 0.4 wt.-%, most preferably 0.08 to 0.25 wt.-%, and in particular 0.10 to 0.15 wt.-% relative to the weight of the monomer composition.

In the method according to the invention, further polymerization initiators may be added to the reaction mixture apart from the redox initiator system, the first auxiliary radical initiator and the second auxiliary radical initiator.

Preferred embodiments A¹ to A²⁶ regarding the relative weight contents of oxidizing agent relative to the weight content of the first auxiliary radical initiator are summarized in the tables here below:

| | A¹ | A² | A³ | A⁴ | A⁵ | A⁶ | A⁷ | A⁸ | A⁹ | A¹⁰ | A¹¹ | A¹² | A¹³ |
|---|---|---|---|---|---|---|---|---|---|---|---|---|---|
| oxidizing agent | 90 | 80 | 75 | 70 | 65 | 60 | 57 | 55 | 53 | 50 | 47 | 45 | 43 |
| first auxiliary radical initiator | 100 | 100 | 100 | 100 | 100 | 100 | 100 | 100 | 100 | 100 | 100 | 100 | 100 |

| | A¹⁴ | A¹⁵ | A¹⁶ | A¹⁷ | A¹⁸ | A¹⁹ | A²⁰ | A²¹ | A²² | A²³ | A²⁴ | A²⁵ | A²⁶ |
|---|---|---|---|---|---|---|---|---|---|---|---|---|---|
| oxidizing agent | 40 | 37 | 35 | 33 | 30 | 27 | 25 | 23 | 20 | 17 | 15 | 13 | 10 |
| first auxiliary radical initiator | 100 | 100 | 100 | 100 | 100 | 100 | 100 | 100 | 100 | 100 | 100 | 100 | 100 |

Preferred embodiments B¹ to B²⁶ regarding the relative weight contents of reducing agent relative to the weight content of the first auxiliary radical initiator are summarized in the tables here below:

| | B¹ | B² | B³ | B⁴ | B⁵ | B⁶ | B⁷ | B⁸ | B⁹ | B¹⁰ | B¹¹ | B¹² | B¹³ |
|---|---|---|---|---|---|---|---|---|---|---|---|---|---|
| reducing agent | 90 | 80 | 75 | 70 | 65 | 60 | 57 | 55 | 53 | 50 | 47 | 45 | 43 |
| first auxiliary radical initiator | 100 | 100 | 100 | 100 | 100 | 100 | 100 | 100 | 100 | 100 | 100 | 100 | 100 |

| | B¹⁴ | B¹⁵ | B¹⁶ | B¹⁷ | B¹⁸ | B¹⁹ | B²⁰ | B²¹ | B²² | B²³ | B²⁴ | B²⁵ | B²⁶ |
|---|---|---|---|---|---|---|---|---|---|---|---|---|---|
| reducing agent | 40 | 37 | 35 | 33 | 30 | 27 | 25 | 23 | 20 | 17 | 15 | 13 | 10 |
| first auxiliary radical initiator | 100 | 100 | 100 | 100 | 100 | 100 | 100 | 100 | 100 | 100 | 100 | 100 | 100 |

Preferred embodiments C¹ to C³⁹ regarding the relative weight contents of the second auxiliary radical initiator relative to the weight content of the first auxiliary radical initiator are summarized in the tables here below:

| | C¹ | C² | C³ | C⁴ | C⁵ | C⁶ | C⁷ | C⁸ | C⁹ | C¹⁰ | C¹¹ | C¹² | C¹³ |
|---|---|---|---|---|---|---|---|---|---|---|---|---|---|
| second auxiliary radical initiator | 8.00 | 7.00 | 6.00 | 5.00 | 4.00 | 3.50 | 3.00 | 2.50 | 2.00 | 1.50 | 1.00 | 0.95 | 0.90 |
| first auxiliary radical initiator | 100 | 100 | 100 | 100 | 100 | 100 | 100 | 100 | 100 | 100 | 100 | 100 | 100 |

| | C¹⁴ | C¹⁵ | C¹⁶ | C¹⁷ | C¹⁸ | C¹⁹ | C²⁰ | C²¹ | C²² | C²³ | C²⁴ | C²⁵ | C²⁶ |
|---|---|---|---|---|---|---|---|---|---|---|---|---|---|
| second auxiliary radical initiator | 0.85 | 0.80 | 0.75 | 0.70 | 0.65 | 0.60 | 0.57 | 0.55 | 0.53 | 0.50 | 0.47 | 0.45 | 0.43 |
| first auxiliary radical initiator | 100 | 100 | 100 | 100 | 100 | 100 | 100 | 100 | 100 | 100 | 100 | 100 | 100 |

| | C²⁷ | C²⁸ | C²⁹ | C³⁰ | C³¹ | C³² | C³³ | C³⁴ | C³⁵ | C³⁶ | C³⁷ | C³⁸ | C³⁹ |
|---|---|---|---|---|---|---|---|---|---|---|---|---|---|
| second auxiliary radical initiator | 0.40 | 0.37 | 0.35 | 0.33 | 0.30 | 0.27 | 0.25 | 0.23 | 0.20 | 0.17 | 0.15 | 0.13 | 0.10 |
| first auxiliary radical initiator | 100 | 100 | 100 | 100 | 100 | 100 | 100 | 100 | 100 | 100 | 100 | 100 | 100 |

Particularly preferred embodiments include A⁷B¹⁶C¹⁶, A⁸B¹⁶C¹⁶, A⁹B¹⁶C¹⁶, A¹⁰B¹⁶C¹⁶, A¹¹B¹⁶C¹⁶, A¹²B¹⁶C¹⁶, A¹³B¹⁶C¹⁶, A¹⁴B¹⁶C¹⁶, A¹⁵B¹⁶C¹⁶, A¹⁶B¹⁶C¹⁶, A¹⁷B¹⁶C¹⁶, A¹⁸B¹⁶C¹⁶, A¹⁹B¹⁶C¹⁶, A⁷B²⁰C²³, A⁸B²⁰C²³, A⁹B²⁰C²³, A¹⁰B²⁰C²³, A¹¹B²⁰C²³, A¹²B²⁰C²³, A¹³B²⁰C²³, A¹⁴B²⁰C²³, A¹⁵B²⁰C²³, A¹⁶B²⁰C²³, A¹⁷B²⁰C²³, A¹⁸B²⁰C²³, A¹⁹B²⁰C²³, A¹⁶B¹¹C¹⁶, A¹⁶B¹²C¹⁶, A¹⁶B¹³C¹⁶, A¹⁶B¹⁴C¹⁶, A¹⁶B¹⁵C¹⁶, A¹⁶B¹⁶C¹⁶, A¹⁶B¹⁷C¹⁶, A¹⁶B¹⁸C¹⁶, A¹⁶B¹⁹C¹⁶, A¹⁶B²⁰C¹⁶, A¹⁶B²¹C¹⁶, A¹⁶B²²C¹⁶, A¹⁶B²³C¹⁶, A¹⁰B¹¹C²³, A¹⁰B¹²C²³, A¹⁰B¹³C²³, A¹⁰B¹⁴C²³, A¹⁰B¹⁵C²³, A¹⁰B¹⁶C²³, A¹⁰B¹⁷C²³, A¹⁰B¹⁸C²³, A¹⁰B¹⁹C²³, A¹⁰B²⁰C²³, A¹⁰B²¹C²³, A¹⁰B²²C²³, A¹⁰B²³C²³, A¹⁶B¹⁶C¹⁵, A¹⁶B¹⁶C¹⁶, A¹⁶B¹⁶C¹⁷, A¹⁶B¹⁶C¹⁸, A¹⁶B¹⁶C¹⁹, A¹⁶B¹⁶C²⁰, A¹⁶B¹⁶C²¹, A¹⁶B¹⁶C²², A¹⁶B¹⁶C²³, A¹⁶B¹⁶C²⁴, A¹⁶B¹⁶C²⁵, A¹⁶B¹⁶C²⁶, A¹⁶B¹⁶C²⁷, A¹⁰B²⁰C¹⁵, A¹⁰B²⁰C¹⁶, A¹⁰B²⁰C¹⁷, A¹⁰B²⁰C¹⁸, A¹⁰B²⁰C¹⁹, A¹⁰B²⁰C²⁰, A¹⁰B²⁰C²¹, A¹⁰B²⁰C²², A¹⁰B²⁰C²³, A¹⁰B²⁰C²⁴, A¹⁰B²⁰C²⁵, A¹⁰B²⁰C²⁶ and A¹⁰B²⁰C²⁷.

In another particularly preferred embodiment, the relative weight contents of oxidizing agent, reducing agent, first auxiliary radical initiator and second auxiliary radical initiator are 37.5 to 37.5 to 100 to 0.75, relative to the weight content of the first auxiliary radical initiator.

In still another particularly preferred embodiment, the relative weight contents of oxidizing agent, reducing agent, first auxiliary radical initiator and second auxiliary radical initiator are 50.00 to 25.00 to 100 to 0.53, relative to the weight content of the first auxiliary radical initiator.

In yet another particularly preferred embodiment, the relative weight contents of oxidizing agent, reducing agent, first auxiliary radical initiator and second auxiliary radical initiator are 33.33 to 26.67 to 100 to 0.47, relative to the weight content of the first auxiliary radical initiator.

Preferably, the initiators are dissolved in the solvent of the reaction mixture and are added to the reaction mixture as a solution.

The initiators can be added completely or also only in part at the beginning of the polymerization, with subsequent apportioning of the residual amount over the entire course of polymerization, with the proviso that at least a portion of the redox initiator system and at least a portion of the one or more auxiliary radical initiator is added to the reaction mixture before 90 mol.-% of the radically polymerizable monomers, which were originally contained in the monomer composition, are polymerized.

The redox initiator system and one or more auxiliary radical initiators may be added to the reaction mixture sequentially or simultaneously.

In step (C), the radically polymerizable monomers are polymerized by adding to the reaction mixture sequentially or simultaneously
(iii) a predetermined amount of a redox initiator system comprising an oxidizing agent and a reducing agent;
(iv) a predetermined amount of a first auxiliary radical initiator; and
(v) a predetermined amount of a second auxiliary radical initiator;
with the proviso that at least a portion of said predetermined amount of the redox initiator system, at least a portion of said predetermined amount of the first auxiliary radical initiator, and at least a portion of said predetermined amount of the second auxiliary radical initiator is added to the reaction mixture before 90 mol-% of the radically polymerizable monomers, which were originally contained in the monomer composition, are polymerized.

Preferably, the "predetermined amount" of redox initiator system, first auxiliary radical initiator and second auxiliary radical initiator, respectively, is the total amount of said redox initiator system, said first auxiliary radical initiator and said second auxiliary radical initiator, respectively, which is employed in the method according to the invention.

Preferably, a "portion of the predetermined amount" of redox initiator system, first auxiliary radical initiator and second auxiliary radical initiator, respectively, is at least 10 wt.-%, more preferably at least 50 wt.-%, still more preferably at least 70 wt.-%, yet more preferably at least 80 wt.-%, most preferably at least 90 wt.-%,and in particular at least 99 wt.-% of the predetermined amount of said redox initiator system, said first auxiliary radical initiator and said second auxiliary radical initiator, respectively.

At least a portion of the predetermined amount of the redox initiator system, at least a portion of the predetermined amount of the first auxiliary radical initiator, and at least a portion of the predetermined amount of the second auxiliary radical initiator is added to the reaction mixture before 90 mol-%, preferably before 95 mol-%, more preferably before 97 mol-%, most preferably before 99 mol-%, and in particular before 99.999 mol-% of the radically polymerizable monomers, which were originally contained in the monomer composition, are polymerized.

In a preferred embodiment, step (C) comprises the substeps of
(C₁) adding the at least portion of the predetermined amount of the redox initiator system to the reaction mixture;
(C₂) adding the at least portion of the predetermined amount of the first auxiliary radical initiator to the reaction mixture; and
(C₃) adding the at least portion of the predetermined amount of the second auxiliary radical initiator to the reaction mixture;
wherein substep (C₂) is performed after substep (C₁), and wherein substep (C₃) is performed after substep (C₂).

Preferably, in substep (C₁) the oxidizing agent is added prior to the reducing agent.

When step (C) is performed as a continuous polymerization process, e.g. on a moving conveyor belt, the reaction mixture comprises a plurality of sections which differ from one another in the progress of the polymerization reaction. The degree of polymerization in the sections at the beginning of the conveyor belt is comparatively low, whereas the degree of polymerization in the sections at the end of the conveyor belt is comparatively high. Thus, in a continuous polymerization, the conditions defined for the "reaction mixture" apply to each and every of said sections.

At the end of the polymerization, preferably a redox initiator system or a radical initiator is added in order to reduce the content of residual monomers.

The redox initiator system or the radical initiator, which is added in order to reduce the content of residual monomers, may be identical to or different from the redox initiator system and/or the first auxiliary radical initiator and/or the second auxiliary radical initiator of step (C).

In a preferred embodiment, the redox initiator system or the radical initiator, which is added in order to reduce the content of residual monomers, is a redox initiator system which is preferably identical to the redox initiator system of step (C).

In a preferred embodiment, the redox initiator system or the radical initiator, which is added in order to reduce the content of residual monomers, is a radical initiator which is preferably identical to the first auxiliary radical initiator and/or the second auxiliary radical initiator of step (C).

In a particularly preferred embodiment, the redox initiator system or the radical initiator, which is added in order to reduce the content of residual monomers, is a radical initiator which is preferably identical to the first auxiliary radical initiator of step (C).

Preferably, the amount of redox initiator system or radical initiator, which is added in order to reduce the content of residual monomers, is of from 0.001 to 1 wt.-%, more preferably 0.003 to 0.7 wt.-%, still more preferably 0.005 to 0.4 wt.-%, yet more preferably 0.007 to 0.1 wt.-%, most preferably 0.009 to 0.08 wt.-% and in particular 0.01 to 0.07 wt.-% relative to the total weight of the polymer dispersion. Preferably, the amount of redox initiator system or radical initiator, which is added in order to reduce the content of residual monomers, is of from 0.01 to 2 wt.-%, more preferably 0.03 to 1.6 wt.-%, still more preferably 0.05 to 1.3 wt.-%, yet more preferably 0.07 to 1.0 wt.-%, most preferably 0.09 to 0.7 wt.-% and in particular 0.10 to 0.5 wt.-% relative to the total amount of the monomer composition. Preferably, the amount of redox initiator system or radical initiator, which is added in order to reduce the content of residual monomers is of from 1·10⁻⁷ to 1·10⁻² mol-%, more preferably 8·10⁻⁷ to 5·10⁻³ mol-%, still more preferably 2·10⁻⁶ to 1·10⁻³ mol-%, most preferably 8·10⁻⁶ to 5·10⁻⁴ mol-% and in particular 2·10⁻⁵ to 1.5·10⁻⁴ mol-% relative to the total amount of the monomer composition.

In another advantageous embodiment of the method according to the invention, the monomer composition and/or the polymeric dispersant are apportioned into the reaction vessel during polymerization. In general, a portion, e.g. 10 to 20% of the radically polymerizable monomers and the polymeric dispersant, is initially introduced. Following initiation of polymerization, the above-mentioned apportioning is effected, optionally accompanied by further apportioning of polymerization initiator.

In addition, it is also possible to remove solvent during polymerization and optionally to add further polymeric dispersant.

In a preferred embodiment of the method according to the invention, further polymeric dispersant is added to the polymer dispersion after step (C), or after optional steps (D), (E) or (F). Said further polymeric dispersant may be identical to or different from the polymeric dispersant of step (A).

In a preferred embodiment of the method according to the invention, the further polymeric dispersant is be identical to the polymeric dispersant of step (A).

In a preferred embodiment of the method according to the invention, a predetermined amount of the polymeric dispersant is added in step (A), while the remainder of said predetermined amount of polymeric dispersant is added after step (C) or after optional steps (D), (E) or (F).

In a particularly preferred embodiment of the method according to the invention, further polymeric dispersant is added to the polymer dispersion after step (D).

Preferably, the amount of further polymeric dispersant is of from 0.1 to 20 wt.-%, more preferably 0.5 to 16 wt.-%, still more preferably 0.7 to 13 wt.-%, yet more preferably 1.0 to 10 wt.-%, most preferably 1.3 to 7 wt.-% and in particular 1.5 to 5 wt.-% relative to the total weight of the polymer dispersion.

Preferably, the amount of further polymeric dispersant is of from 1 to 50 wt.-%, more preferably 3 to 40 wt.-%, still more preferably 5 to 30 wt.-%, yet more preferably 6 to 25 wt.-%, most preferably 7 to 20 wt.-% and in particular 8 to 15 wt.-% relative to the total amount of the monomer composition. Preferably, the amount of further polymeric dispersant is of from 0.0001 to 0.1 mol-%, more preferably 0.0003 to 0.08 mol-%, still more preferably 0.0005 to 0.04 mol-%, yet more preferably 0.0006 to 0.01 mol-%, most preferably 0.0007 to 0.009 mol-% and in particular 0.0008 to 0.008 mol-% relative to the total amount of the monomer composition.

Preferably, the amount of further polymeric dispersant is of from 1 to 25 wt.-%, more preferably 3 to 22 wt.-%, still more preferably 5 to 20 wt.-%, yet more preferably 7 to 18 wt.-%, most preferably 9 to 17 wt.-% and in particular 10 to 16 wt.-% relative to the weight of the polymeric dispersant of step (A).

The polymerization temperature generally is 0 to 120 °C, preferably 25 to 90 °C. The polymerization temperature can be selected based on the decomposition kinetics of the initiator used.

The temperature of the reaction mixture before step (C) has a significant potential to effect the polymer molecular weight distribution. For example, higher reaction temperatures cause a higher decomposition rate of a thermally-induced initiator, generally resulting in lower molecular weight polymer chains.

Optionally, the reaction mixture is heated to a temperature above room temperature in step (B).

In a preferred embodiment, in optional step (B) of the method of the invention, the reaction mixture is heated to a temperature above 20°C, more preferably above 25°C, most preferably above 30°C and in particular above 35°C. In another preferred embodiment, in optional step (B) of the method of the invention, the reaction mixture is heated to a temperature of at most 50°C, more preferably at most 45°C, most preferably at most 40°C and in particular at most 35°C.

In a preferred embodiment, step (C) proceeds under adiabatic conditions. For the purpose of specification, "adiabatic conditions" shall also include those reaction conditions where no additional heat is supplied during step (C) and where the heat which is released during step (C) is not dissipated by actively cooling the reaction mixture during step (C).

In another preferred embodiment, step (C) proceeds under isothermal conditions.

Preferably, the pH value of the reaction mixture is adjusted to a value of 4.8±3 (i.e. from 1.8 to 7.8), more preferably 4.8±2 and most preferably 4.8±1 before step (C).

Preferably, during step (C) the reaction mixture is stirred at maximum agitator speed at which a torque of at least 15 N/cm, preferably at least 17 N/cm, more preferably at least 20 N/cm, still more preferably at least 25 N/cm, yet more preferably at least 30 N/cm, most preferably at least 35 N/cm and in particular at least 40 N/cm is to be applied.

Polymerization times are the same as those conventionally used in the art, generally 1.5 to 18 hours and preferably 2 to 6 hours, although as little as one-half hour could be used. However, attempting more rapid polymerization over a shorter period of time creates problems with removing heat. In this regard it is greatly preferred that the polymerization medium be stirred well or otherwise agitated during the polymerization.

The equipment utilized for the polymerization can simply be standard reactors such as used for oil-in-water or water-in-oil or water-in-water polymerizations.

Polymerization conversion or the end of polymerization can easily be detected by determining the content of residual monomers. Methods for this purpose are familiar to those skilled in the art (e.g. HPLC).

The polymerization is preferably carried out in such a way that the system is purged with an inert gas and polymerized under an inert gas atmosphere, e.g. under a nitrogen atmosphere.

Following polymerization, it can be advantageous to cool down the reaction mixture before optionally adding further additives, such as salts or acids, to the dispersion, preferably with stirring.

Preferably, no fibers, such as synthetic fibers, natural fibers, semi-synthetic fibers or inorganic fibers, are added to the reaction mixture. Preferably, the polymer dispersion according to the invention does not contain any fibers, such as synthetic fibers, natural fibers, semi-synthetic fibers or inorganic fibers.

To reduce the residual monomer content, it is also possible to increase the temperature during the course of the polymerization. Alternatively, it is also possible to use additional initiators during and at the end of the polymerization and/or residual monomer destructors.

In optional step (D), the residual monomer content is preferably reduced by adding to the reaction mixture
- a redox initiator system; and/or
- an auxiliary radical initiator which may be identical to the first and/or the second radical initiator; and/or
- a third auxiliary radical initiator which is different from the first and the second radical initiator.

In a preferred embodiment, in optional step (D) the residual monomer content is reduced by adding to the reaction mixture
- the remainder from step (C) of the predetermined amount of the redox initiator system, the remainder from step (C) of the predetermined amount of the first auxiliary radical initiator, and/or the remainder from step (C) of the predetermined amount of the second auxiliary radical initiator; and/or
- a third auxiliary radical initiator.

The optional step (D) is performed after step (C). Preferably, according to this embodiment, step (D) is performed after the temperature maximum has been reached and/or after at least 90 mol.-% of the radically polymerizable monomers, which were originally contained in the monomer composition, have been polymerized.

Preferably, the molar amount of said remainder from step (C) of the predetermined amount relative to the total predetermined amount of the redox initiator system, the first auxiliary radical initiator and the second auxiliary radical initiator, respectively, is of from 1 : 100 to 100 : 1, more preferably 1 : 1 to 50 : 1, still more preferably 2 : 1 to 40 : 1, yet more preferably 3 : 1 to 30 : 1, most preferably 4 : 1 to 20 : 1 and in particular 5 : 1 to 15 :1.

Residual monomer destructors within the meaning of the invention are substances that modify polymerizable monomers by means of a chemical reaction in such a way that they are no longer polymerizable, such that within the meaning of the invention they are no longer monomers. Substances that react with the double bond present in the monomers and/or substances that can initiate a more extensive polymerization can be used for this purpose. As residual monomer destructors that react with the double bond, for example reducing agents can be used, preferably substances from the group of acids and neutral salts of acids derived from sulfur having an oxidation number lower than VI, preferably sodium dithionite, sodium thiosulfate, sodium sulfite or sodium disulfite, and/or substances having a hydrogen sulfide group, preferably sodium hydrogen sulfide or compounds from the group of thiols, preferably mercaptoethanol, dodecyl mercaptan, thiopropionic acid or salts of thiopropionic acid or thiopropanesulphonic acid or salts of thiopropanesulphonic acid, and/or substances from the group of amines, preferably from the group of amines with low volatility, preferably diisopropanolamine or aminoethyl ethanolamine, and/or substances from the group comprising Bunte salts, formamidine sulfinic acid, sulfur dioxide, aqueous and organic solutions of sulfur dioxide or thio urea.

Preferably, the polymer dispersion has a residual content of radically polymerizable cationic monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, the polymer dispersion has a residual content of radically polymerizable non-ionic monomers according to general formula (I) of at most 5,000 ppm, more preferably at most 2,500 ppm, still more preferably at most 1,000 ppm, yet more preferably at most 800 ppm, most preferably at most 600 ppm an in particular at most 400 ppm.

The polymerization reaction of step (C) transforms the reaction mixture into a polymer dispersion. After step (C) or after optional step (D) or after preferred step (F), the resultant polymer dispersion may be distillated in order to reduce the content of the solvent.

A further aspect of the invention relates to a polymer dispersion comprising
(i) a polymeric dispersant and
(ii) a polymer derived from a monomer composition comprising radically polymerizable monomers,
which polymer dispersion is obtainable by the method according to the invention.

In a preferred embodiment, the polymer dispersions contain only minor fractions of low molecular weight polymers.

In a preferred embodiment, the polymer which is obtained in step (C) contains covalently bound sulfur.

Preferably, the polymer that is obtained in step (C) exhibits a degree of polymerization of at least 90%, more preferably at least 95%, still more preferably at least 99%, yet more preferably at least 99.9%, most preferably at least 99.95% and in particular at least 99.99%.

The skilled person knows how to measure and to influence the weight average molecular weight of the polymer that is obtained in step (C), e.g. by modifying the initiator concentration, the addition of chain-transfer agents, and the like. Preferably, the weight average molecular weight is determined by gel permeation chromatography (GPC), preferably using 1.5% formic acid as eluent versus pullulan standards, or rheological measurements.

Preferably, the weight average molecular weight of the polymer that is obtained in step (C) is at least 1,000,000 g mol⁻¹ or at least 1,250,000 g mol⁻¹, more preferably at least 1,500,000 g mol⁻¹ or at least 1,750,000 g mol⁻¹, still more preferably at least 2,000,000 g mol⁻¹ or at least 2,250,000 g mol⁻¹, yet more preferably at least 2,500,000 g mol⁻¹ or at least 2,750,000 g mol^{- 1}, most preferably at least 3,000,000 g mol⁻¹ or at least 3,250,000 g mol⁻¹, and in particular at least 3,500,000 g mol⁻¹ or at least 3,750,000 g mol⁻¹.

Preferably, the molecular weight dispersity M_{w}/Mₙ of the polymer that is obtained in step (C) is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

In a preferred embodiment of the polymer dispersion according to the invention the weight average molecular weight M_{w} of the polymer that is obtained in step (C) is higher than the weight average molecular weight M_{w} of the polymeric dispersant.

In a preferred embodiment, the relative weight ratio of the polymer that is obtained in step (C) to the polymeric dispersant is within the range of from 10:1 to 0.1:1, more preferably 9:1 to 0.25:1 or 4:1 to 0.6:1, still more preferably 8:1 to 0.5:1 or 3.5:1 to 0.7:1, yet more preferably 7:1 to 1:1 or 3:1 to 0.8:1, most preferably 6:1 to 2:1 or 2.8:1 to 0.9:1 and in particular 5:1 to 3:1 or 2.5:1 to 1:1. In another preferred embodiment, the relative weight ratio of the polymer that is obtained in step (C) to the polymeric dispersant is within the range of from 9:1 to 0.05:1, more preferably 7:1 to 0.1:1, still more preferably 5:1 to 0.3:1, yet more preferably 3:1 to 0.5:1, most preferably 2:1 to 1:1 and in particular 1.5:1 to 1.2:1. Preferably, the relative weight ratio of polymer that is obtained in step (C) : polymeric dispersant is > 1:1.

Preferably, the weight average molecular weight M_{w} of the polymer mixture present in the polymer dispersion, comprising the polymer that is obtained in step (C) and the polymeric dispersant, is at least 1.5 10⁶ g/mol, more preferably at least 2.0 10⁶ g/mol, still more preferably at least 2.5 10⁶ g/mol, yet more preferably at least 3.0 10⁶ g/mol, most preferably at least 3.5 10⁶ g/mol and in particular at least 4.0 10⁶ g/mol, as measured according to the GPC method.

Preferably, the polymer dispersion according to the invention has
- a solution viscosity (according to Brookfield) within the range of from 500 to 5,000 mPas, more preferably 600 to 3,000 mPas, still more preferably 700 to 2,500 mPas, most preferably 800 to 1,800 mPas and in particular 900 to 1,300 mPas; and/or
- a product viscosity within the range of from 1,000 to 50,000 mPas, more preferably 5,000 to 30,000 mPas, still more preferably 8,000 to 25,000 mPas, yet more preferably 10,000 to 20,000 mPas, most preferably 12,000 to 19,000 mPas and in particular 12,000 to 17,000 mPas; and/or
- a salt viscosity within the range of from 300 to 1,500 mPas, more preferably 400 to 1,300 mPas, still more preferably 500 to 1,200 mPas, most preferably 550 to 1,100 mPas and in particular 600 to 1,000 mPas.

In a particularly preferred embodiment, the polymer dispersion according to the invention has a product viscosity within the range of from 1,300 to 16,000 mPas; and a solution viscosity (according to Brookfield) within the range of from 1,000 to 1,200 mPas; and a salt viscosity within the range of from 860 to 960 mPas or 680 to 780 mPas.

In a preferred embodiment, the content of sediment, which is contained in the polymer dispersion according to the invention is at most 30 wt.-%, preferably at most 25 wt.-%, more preferably at most 20 wt.-%, still more preferably at most 15 wt.-%, most preferably at most 10 wt.-% and in particular at most 5 wt.-%, as determined *via* centrifugation.

Preferably, the polymer dispersion according to the invention exhibits a tan delta value at 0.005 Hz (0.00464 Hz) in 0.5 wt.-% solution at 25 °C within the range of from 4.0 to 12.0, more preferably 4.5 to 10.0, most preferably 5.0 to 9.0.

Tan delta is a measure of viscoelasticity. The value of tan delta is the ratio of the loss (viscous) modulus G" to storage (elastic) modulus G' within the system. G' and G" measurements are recorded and used to calculate tan delta (G"/G') values. On the one hand, at equivalent stress, materials with a low tan delta (<1) and higher G' value strain or deform less, thus exhibiting a stronger associated structure. These materials are mechanically stable and do not relax within the time frame or at the frequency of the measurement. Such materials are thus more elastic. On the other hand, at equivalent stress, materials with a higher tan delta value (>1) and higher G" value exhibit a viscous type of response and the stress of the sample will permit a linear polymer to relax at a low frequency. It has been surprisingly found that when varying the chain length of the hydrophobic moiety of the radically polymerizable hydrophobic monomer according to general formula (I) (=R²), the tan delta value of the polymer dispersion may be decreased. In other words, viscoelasticity of the system may be triggered by the chemical nature of the radically polymerizable hydrophobic monomer.

The skilled person knows how to determine the tan delta value. Preferably, the tan delta at 0.005 Hz value is obtained using a rheometer in oscillation mode on a 0.5% by weight aqueous solution of polymer in deionized water after tumbling for two hours.

Preferably, the polymer dispersions according to the invention are liquid. In comparison to powders and pastes, liquid dispersions are easier to dose. Powders usually require expensive dosing equipment.

The solvent content of the polymer dispersion may be as it is after *in situ* polymerization. In a preferred embodiment, however, the solvent content is reduced, e.g. by vaporizing a portion of the solvent.

Preferably, the polymer dispersion is aqueous, i.e. preferably, the solvent referred to hereinafter is water.

In a preferred embodiment the solvent content of the polymer dispersion is within the range of 40±25 wt.-%, more preferably 40±20 wt.-%, still more preferably 40±15 wt.-%, yet more preferably 40±10 wt.-%, most preferably 40±7.5 wt.-% and in particular 40±5 wt.-%. In another preferred embodiment the solvent content of the polymer dispersion is within the range of 50±25 wt.-%, more preferably 50±20 wt.-%, still more preferably 50±15 wt.-%, yet more preferably 50±10 wt.-%, most preferably 50±7.5 wt.-% and in particular 50±5 wt.-%. In still another preferred embodiment the solvent content of the polymer dispersion is within the range of 60±25 wt.-%, more preferably 60±20 wt.-%, still more preferably 60±15 wt.-%, yet more preferably 60±10 wt.-%, most preferably 60±7.5 wt.-% and in particular 60±5 wt.-%. In still another preferred embodiment, the solvent content of the polymer dispersion is within the range of 63±20 wt.-%, more preferably 63±15 wt.-%, still more preferably 63±10 wt.-%, yet more preferably 63±7 wt.-%, most preferably 63±5 wt.-% and in particular 63±3 wt.-%. In a particularly preferred embodiment, the solvent content of the polymer dispersion is at most 80 wt.-%, more preferably at most 75 wt.-%, still more preferably at most 72 wt.-%, yet more preferably at most 70 wt.-%, most preferably at most 68 wt.-%and in particular at most 67 wt.-%.

Preferably, the content of the polymer that is obtained in step (C) is within the range of from 0.1 to 90 wt.-%, more preferably 1.0 to 80 wt.-%, still more preferably 2.5 to 70 wt.-%, yet more preferably 5.0 to 60 wt.-%, most preferably 10 to 40 wt.-% and in particular 15 to 25 wt.-%, based on the total weight of the polymer dispersion.

In a preferred embodiment, the overall polymer content, i.e. the content of the polymer that is obtained in step (C) and the polymeric dispersant, is at least 20 wt.-%, more preferably at least 30 wt.-%, still more preferably at least 33 wt.-% or at least 35 wt.-%, yet more preferably at least 36 wt.-% or at least 40 wt.-%, most preferably within the range of from 45 wt.-% to 65 wt.-% and in particular from 50 wt.-% to 60 wt.-%, based on the total weight of the polymer dispersions. In another preferred embodiment, the overall polymer content of the polymer dispersions according to the invention is at least 10 wt.-%, more preferably at least 15 wt.-%, still more preferably at least 20 wt.-%, yet more preferably at least 25 wt.-%, most preferably within the range of from 25 wt.-% to 45 wt.-% and in particular from 30 wt.-% to 40 wt.-%, based on the total weight of the polymer dispersions.

Preferably, the overall polymer content, i.e. the content of the polymer that is obtained in step (C) and the polymeric dispersant, is within the range of 40±20 wt.-% or 35±20 wt.-%, more preferably 40±15 wt.-% or 35±15 wt.-%, still more preferably 40±10 wt.-% or 35±10 wt.-%, and most preferably 40±5 wt.-% or 35±5 wt.-%, based on the total weight of the polymer dispersion. In a preferred embodiment, the overall polymer content is at least 30 wt.-% or at least 36 wt.-%, more preferably at least 31 wt.-% or at least 37 wt.-%, still more preferably at least 32 wt.-% or at least 38 wt.-%, most preferably at least 33 wt.-% or 39 wt.-%, most preferably at least 34 wt.-% or at least 40 wt.-% and in particular within the range of from 32 to 36 wt.-% or 40 to 45 wt.-%, based on the total weight of the polymer dispersion.

In a particularly preferred embodiment, the overall polymer content of the polymer dispersions according to the invention is close to the saturation limit, i.e. close to the limiting concentration beyond which no further polymer may be dispersed (at ambient conditions and without adding further emulsifiers). Preferably, the overall polymer content of the polymer dispersion is at least 50% of said limiting concentration, more preferably at least 60%, still more preferably at least 70%, yet more preferably at least 80%, most preferably at least 85% and in particular at least 90% of said limiting concentration. The skilled person knows how to determine the limiting concentration of a polymer dispersion at ambient conditions.

Thus, in other words, the solvent content of the polymer dispersions is preferably close to the saturation limit. The polymer dispersions according to the invention can be commercialized as stable concentrates that are diluted prior to the individual application. The provision as concentrates reduces shipping costs and improves handling performance. It has been surprisingly found that the *in situ* polymerization in step (C) of the monomers forming the polymer in the presence of the polymeric dispersant can be conducted at comparatively high monomer concentrations (i.e., at a comparatively low solvent content) and thus, a highly concentrated polymer dispersion is obtained without requiring concentration steps, such as evaporating substantial amounts of excessive solvent under vacuum at elevated temperature.

When the polymer dispersion is non-aqueous, the polymers contained in the polymeric dispersion comprising the polymer obtained in step (C) and the polymeric dispersant, may be isolated and redispersed in water. The skilled person knows how to isolate compounds from solutions and to redisperse them in new solvent.

Optionally, the polymer dispersions according to the invention may contain further conventional components, e.g. in the form of water-soluble or oil-soluble acids and/or salts.

In a preferred embodiment of the method according to the invention, acid is added after polymerization in quantities of 0.1 to 5.0 wt.-%, based on the total weight of the reaction mixture. Water-soluble organic acids and/or inorganic acids can be present. More specifically, suitable organic water-soluble acids are organic carboxylic acids, sulfonic acids, phosphonic acids, preferably aliphatic or aromatic mono-, di-, polycarboxylic acids and/or hydroxycarboxylic acids, preferably acetic acid, propionic acid, citric acid, oxalic acid, succinic acid, malonic acid, adipic acid, fumaric acid, maleic acid, benzoic acid, especially preferably citric acid, adipic acid and/or benzoic acid. Suitable inorganic acids are water-soluble mineral acids, preferably hydrochloric acid, sulfuric acid, nitric acid and/or phosphoric acid. Very particularly preferred are citric acid, adipic acid, benzoic acid, hydrochloric acid, sulfuric acid and/or phosphoric acid.

Preferably, when a salt as well as an acid are present, the anion of the salt differs from the chemical nature of the acid, i.e. when the acid is citric acid, the salt is no citric acid salt.

The acid is preferably present in amounts of from 0.1 to 5 wt.-%, more preferably 0.1 to 3 wt.-% and most preferably 0.4 to 1.2 wt.-%, based on the total weight of the polymer dispersion. The salt is preferably present in amounts of from 0.1 to 5 wt.-%, more preferably 0.1 to 3 wt.-% and most preferably 0.6 to 1.4 wt.-%, based on the total weight of the polymer dispersion. Acid and salt taken together are preferably present in amounts of at most 5 wt.-%, more preferably at most 4 wt.-%, still more preferably at most 3 wt.-%, most preferably at most 2.5 wt.-% and in particular at most 2.0 wt.-%, based on the total weight of the polymer dispersion.

The further conventional components can be added before, during or after step (C). In a preferred embodiment, at least a portion of the salt is added before step (C). In another preferred embodiment, at least a portion of the acid is added after step (C), more preferably after step (D).

Preferably, the electrical conductivity of the polymer dispersion according to the invention at 20 °C is at least 1.0 Ω⁻¹m⁻¹ more preferably at least 2.5 Ω⁻¹m⁻¹, still more preferably at least 5.0 Ω⁻¹m⁻¹, yet more preferably within the range of from 5.0 to 80 Ω⁻¹m⁻¹, most preferably within the range of from 7.5 to 70 Ω⁻¹m⁻¹, and in particular within the range of from 10 to 60 Ω^{- 1}m⁻¹.

Furthermore, the polymer dispersions according to the invention may contain polyfunctional alcohols, preferably water-soluble polyfunctional alcohols and/or reaction products thereof with fatty amines in amounts of up to 30 wt.%, preferably up to 15 wt.%, and more preferably up to 10 wt.%, relative to the polymeric dispersant. More specifically, suitable compounds in this context are polyalkylene glycols, preferably polyethylene glycols, polypropylene glycols, block copolymers of propylene/ethylene oxides, with molecular weights of 50 to 50,000 g/mol, preferably 1,500 to 30,000 g/mol, low-molecular weight polyfunctional alcohols such as glycerol, ethylene glycol, propylene glycol, pentaerythritol and/or sorbitol as polyfunctional water-soluble alcohols and/or the reaction products thereof with fatty amines having C₆-C₂₂ in the alkyl or alkylene residues.

Said water-soluble polyfunctional alcohols and/or reaction products thereof with fatty amines can be added before, during or after step (C).

The polymer dispersions according to the invention are storage stable, i.e. no substantial sedimentation of the ingredients is observed upon storage under ambient conditions for several days. As sedimentation causes a change of the haze value of the polymer dispersion, storage stability may be expressed in terms of a decrease of the haze value upon storage. Suitable optical methods to measure the haze value are known to the person of ordinary skill. Preferably, the haze value of the polymer dispersion does not change more than 25%, more preferably not more than 20%, still more preferably not more than 15%, yet more preferably more than 10%, most preferably not more than 7.5% and in particular not more than 5% after storage for 28 days under ambient conditions.

Preferably, the polymer dispersions according to the invention are acidic, i.e. have a pH value below 7.0, more preferably below 6.5, still more preferably below 6.0, yet more preferably below 5.5, most preferably below 5.0 and in particular below 4.5.

The polymer dispersions according to the invention have several advantages over conventional polymer dispersions, e.g.:
- polymers having a higher molecular weight may be obtained resulting *inter alia* in improved rheological properties of the polymer dispersions;
- product viscosities and salt resistance are extremely high - these properties are particularly desirable for enhanced oil recovery or at paper machines with closed water circuit; products having high product viscosities show a decreased tendency for layering;
- the molar ratio of ionic monomers to non-ionic monomers in the polymeric dispersant and/or in the polymer which is obtained in step (C) may be varied within broad limits without significantly deteriorating the essential properties of the polymer dispersions;
- the chemistry of the polymeric dispersant is substantially independent from the chemistry of the polymer which is obtained in step (C); and
- the advantageous properties of the polymer dispersions are maintained under shear conditions.

The polymer dispersions according to the invention are useful as additives in solid/liquid separation processes, e.g., as flocculants in the sedimentation, flotation or filtration of solids; as thickeners; or as a retention agents or drainage aid, e.g., in papermaking/retention in paper; or in sludge dewatering in sewage plants or oil-recovery. They show improved application performance, especially regarding ash retention in paper retention and dewatering, particularly under shear conditions. The polymer dispersions obtainable according to the invention have the unexpected advantage of being excellent auxiliaries in paper making, particularly useful as retention and dewatering agents in paper making.

A further aspect of the invention relates to the use of the polymer dispersion according to the invention as flocculant (flocculating agent), preferably in the manufacture of paper, preferably as retention aid and/or drainage aid, or as thickener or in oil-recovery, or as a contaminant control or as a dry strength aid.

In this regard, "contaminant control" preferably refers to contaminants that typically occur in paper manufacturing including pulp and papermaking operation, such as machine stock control, e.g. organic contaminant control and inorganic scale control; press section optimization , e.g. press roll contaminant control, press roll adhesion control, press fabric conditioning/cleaning or press fabric passivation; dryer section passivation, e.g. dryer cylinder contaminant control or dryer fabric contaminant control.

In this regard, "dry strength aid" preferably also refers to paper technology.

In a preferred embodiment, the polymer dispersion according to the invention is used
- as a flocculant in the sedimentation, flotation or filtration of solids;
- as a thickener;
- as a contaminant control;
- as a dry strength aid, retention agent or drainage aid in papermaking.

A further aspect relates to a process for the manufacture of paper, paperboard or cardboard, the process comprising the step of (ii) adding the polymer dispersion according to the invention to an aqueous cellulosic suspension. Preferably, the process further comprises the step of (i) adding a further polymeric dispersant to the cellulosic suspension, wherein step (i) is preferably performed prior to step (ii).

Preferably, the process is performed on a paper machine having a closed water circuit. It has been surprisingly found that the high salt resistance of the polymer dispersions according to the invention is particularly advantageous when the process water of the machine is recycled, e.g. for economical and/or ecological reasons. Thus, when the recycled water already contains a certain amount of salt, this does not immediately cause precipitation of the polymer from the polymer dispersion. The salt capacity of the polymer dispersion is sufficiently high so that the process water may be recycled repeatedly without significantly deteriorating the performance of the polymer dispersion according to the invention.

Preferably, the process for the manufacture of paper comprises forming a cellulosic suspension, flocculating the suspension, optionally mechanically shearing the suspension and optionally reflocculating the suspension, draining the suspension on a screen to form a sheet and then drying the sheet, wherein the suspension is flocculated and/or re-flocculated by introducing the polymer dispersion according to the invention.

It has surprisingly been found that the polymer dispersions according to the invention provide improved performance in terms of improved retention, particularly under shear conditions, and yet still maintain good drainage and formation performance. The polymer dispersions flocculate the cellulosic fibers and other components of the cellulosic paper making stock more efficiently thus inducing improvements in retention.

In the process for the manufacture of paper the polymer dispersion may be added to the paper making stock as the sole treatment agent in the paper making process, although preferably the polymer dispersion may be added as part of a multicomponent flocculant system in which the cellulosic suspension is flocculated and then reflocculated.

In one aspect the cellulosic suspension is flocculated by the polymer dispersion (flocculating agent) and then the cellulosic suspension is reflocculated by a further addition of the polymer dispersion (reflocculating agent) or alternatively, by another flocculating material (reflocculating agent). Optionally, the flocs formed are degraded before being reflocculated, by for instance applying mechanical shear. This can be for instance passing the flocculated cellulosic suspension through one or more shear stages such as a centri-screen or a fan pump etc.

In an alternative form the cellulosic suspension is flocculated by introducing a flocculating material (flocculating agent) and the cellulosic suspension is reflocculated by introducing the polymer dispersion (reflocculating agent). Optionally the flocs are degraded before reflocculation.

The cellulosic suspension may be flocculated by introducing the flocculating agent into the suspension at any suitable addition point. This may be for instance before one of the pumping stages or prior to the centri-screen or even after the centri-screen. The cellulosic suspension may then be reflocculated at any suitable point after it has been flocculated. The flocculating agent and reflocculating agent may be added in close proximity, for example without any shear stage between the additions. Preferably, there is at least one shear stage (preferably selected from cleaning, pumping and mixing stages) separating the addition of flocculating agent and reflocculating agent. Desirably, when the flocculating agent is applied prior to a shear stage, for instance a fan pump or the centri-screen, the reflocculating agent may be added after that shear stage. This may be immediately after the shear stage or more usually further after. Thus, the flocculating agent may be added prior to a fan pump and the reflocculating agent may be added after the centri-screen.

Accordingly, the polymer dispersion is added as the flocculating agent and/or as the reflocculating agent.

Desirably, the polymer dispersion may be added to the stock at a dose of 5 to 5,000 ppm, more preferably 50 to 4,000 ppm, still more preferably 150 to 3,000 ppm, yet more preferably 200 to 2,500 ppm, most preferably 250 to 2,000 ppm, and in particular 300 to 1,700 ppm based on solid contents.

When the polymer dispersion is used in a paper making process as part of a multi component flocculating system, it may be added as the flocculating agent and/or reflocculating agent. According to one preferred aspect of the invention the multi component flocculating system comprises the polymer dispersion and a different flocculating material. This flocculating material may be any of the group consisting of water soluble polymers, water insoluble polymeric microbeads, particulate uncooked polysaccharides and inorganic materials. Suitable flocculating materials include inorganic materials such as siliceous materials, alum, aluminium chloro hydrate and polyaluminium chloride.

The cellulosic stock suspension may comprise a filler. The filler may be any of the traditionally used filler materials. For instance, the filler may be clay such as kaolin, or the filler may be a calcium carbonate which could be ground calcium carbonate or in particular precipitated calcium carbonate, or it may be preferred to use titanium dioxide as the filler material. Examples of other filler materials also include synthetic polymeric fillers. The paper making stock may comprise any suitable amount of filler. Generally, the cellulosic suspension comprises at least 5% by weight filler material. Typically the amount of filler will be up to 40% or higher, preferably between 10% and 40% filler.

When the flocculating material is a water soluble polymer, it may be any suitable water soluble polymer, for instance biopolymers, such as nonionic, cationic, anionic and amphoteric starches or other polysaccharides. The flocculating material may also be any suitable cationic, anionic, amphoteric or nonionic synthetic water soluble polymer.

The flocculating material may be a siliceous material which is in the form of an anionic microparticulate composition. The siliceous materials include silica based particles, colloidal silica, silica microgels, silica sols, silica gels, polysilicates, aluminosilicates, borosilicates, polyaluminosilicates, polyborosilicates, zeolites and clays. The clays are preferably swelling clays, for instance this may be typically a bentonite-type clay. The preferred clays are swellable in water and include clays which are naturally water swellable or clays which can be modified, for instance by ion exchange to render them water swellable. Suitable water swellable clays include but are not limited to clays often referred to as hectorite, smectites, montmorillonites, nontronites, saponite, sauconite, hormites,attapulgites and sepiolites.

Alternatively, the flocculating material is a colloidal silica, selected from polysilicates and polyaluminosilicates. This includes polyparticulate polysilicic microgels of surface area in excess of 1,000 m²/g, for instance water soluble polyparticulate polyalumino silicate microgels or aluminate polysilicic acid. In addition the flocculating material may be a colloidal silicic acid.

The flocculating material may also be a colloidal borosilicate. The colloidal borosilicate may be prepared by contacting a dilute aqueous solution of an alkali metal silicate with a cation exchange resin to produce a silicic acid and then forming a heel by mixing together a dilute aqueous solution of an alkali metal borate with an alkali metal hydroxide to form an aqueous solution containing 0.01 to 30% B₂O₃, having a pH of from 7 to 10.5.

The flocculating material used in conjunction with the polymer dispersion, may be an anionic, nonionic, cationic or amphoteric branched water soluble polymer that has been formed from water soluble ethylenically unsaturated monomer or monomer blend. For instance the branched water-soluble polymer may exhibit an intrinsic viscosity above 1.5 dl/g and/or saline Brookfield viscosity of above about 2.0 mPas.

Alternatively, the flocculating material used in conjunction with the polymer dispersion includes cross-linked anionic or amphoteric polymeric micro particles.

A particularly preferred process employs a multi-component flocculation system comprising as a flocculating agent the polymer dispersion and then as a reflocculating agent an anionic flocculating material. The anionic flocculating material includes siliceous materials such as microparticulate silicas, polysilicates, anionic polymeric microbeads and water soluble anionic polymers, including both linear and branched water soluble polymers.

In a particularly preferred embodiment of the process for the manufacture of paper, a further polymeric dispersant is added to the cellulosic suspension, preferably before the polymer dispersion is introduced, i.e. the feed point of said further polymeric dispersant is preferably located "upstream" on the paper machine with respect to the feed point of the polymer dispersion. The feed point of the further polymeric dispersant may be for instance before one of the pumping stages or prior to the centri-screen. The further polymeric dispersant and the polymer dispersion may be added in close proximity, for example without any shear stage between the additions.

Said further dispersant may be identical in structure and/or molecular weight distribution with the polymeric dispersant that is present in the polymer dispersion and in the presence of which the *in situ* polymerization reaction in step (C) is performed. Preferably, however, said further polymeric dispersant differs from the polymeric dispersant that is present in the polymer dispersion. The preferred embodiments of the polymeric dispersant described above in connection with the polymer dispersion also apply to said further polymeric dispersant that is preferably additionally employed in the process for the manufacture of paper.

Preferably, the further polymeric dispersant is cationic.

Preferably, the further polymeric dispersant is derived (synthesized) from
- 30 to 100 wt.% of (alk)acrylamidoalkyltrialkyl ammonium halides, (alk)acryloyloxyalkyl trialkyl ammonium halides, alkenyl trialkyl ammonium halides and/or dialkenyl dialkyl ammonium halides; and 0 to 70 wt.% of nonionic co-monomers; or
- a copolymerizate of epichlorohydrin and dialkylamine.

The polymer dispersion according to the invention may be used as a flocculating agent in a dual flocculating system, wherein excellent retention and drainage performance, respectively, can be combined with good formation.

The polymer dispersions show significantly improved ash retention, which is a well established measure for retention and drainage performance.

In a particularly preferred embodiments of the method according to the invention
- the reaction mixture is aqueous; and/or
- the polymer dispersion which is obtained is a water-in-water polymer dispersion; and/or
- the monomer composition comprises a radically polymerizable non-ionic monomer and a radically polymerizable cationic monomer; and/or
- the monomer composition comprises a radically polymerizable non-ionic monomer which is acrylamide; and/or
- the monomer composition comprises at least 20 wt.-%, more preferably at least 40 wt.-% of a radically polymerizable non-ionic monomer according to general formula (I); and/or
- the monomer composition comprises a radically polymerizable cationic monomer which is ADAME quat.; and/or
- the monomer composition comprises at least 20 wt.-%, more preferably at least 40 wt.-% of a radically polymerizable catonic monomer according to general formula (II); and/or
- the polymeric dispersant is cationic; and/or
- the polymeric dispersant has a weight average molecular weight of more than 220,000 g/mol; and/or
- the polymeric dispersant is a DIMAPA quat. homo polymer; and/or
- the content of the polymeric dispersant in step (A) is in the range of from 10 to 20 wt.-% based on the total weight of the reaction mixture; and/or
- prior to step (C), a salt is added to the reaction mixture; and/or
- prior to step (C), the reaction mixture is heated to a temperature above 25°C, more preferably above 30°C in step (B); and/or
- step (C) is performed sequentially by first adding the redox initiator system, secondly the first auxiliary radical initiator and thirdly the second radical initiator; and/or
- the oxidizing agent is added prior to the reducing agent; and/or
- the redox initiator system comprises persulfate and/or bisulfite; and/or
- the weight average molecular weight of the polymer which is obtained in step (C) is adjusted by the amount of oxidizing agent which is added in step (C); and/or
- the first auxiliary radical initiator is an azo-compound, more preferably 2,2'-azobis(2-amidinopropane) dihydrochloride; and/or
- the second auxiliary radical initiator is an organic peroxide, more preferably t-butyl hydroperoxide; and/or
- the relative weight ratio of the redox initiator system, the first auxiliary radical initiator and the second auxiliary radical initiator relative to the weight of the first auxiliary radical initiator are according to embodiment A¹⁰B²⁰C²³ or A¹⁶B¹⁶C¹⁶; and/or
- the total predetermined amount of the redox initiator system and/or the total predetermined amount of the first auxiliary radical initiator and/or the total predetermined amount of the second auxiliary radical initiator is added in step (C); and/or
- step (C) is performed under adiabatic conditions; and/or
- the overall polymer content, i.e. the content of the polymer that is obtained in step (C) and the polymeric dispersant, is within the range of from 32 to 36 wt.-% or 40 to 45 wt.-%, based on the total weight of the polymer dispersion; and/or
- the relative weight ratio of the polymer that is obtained in step (C) to the polymeric dispersant is within the range of from 5:1 to 3:1 or 2.5:1 to 1:1; and/or
- the residual monomer content is reduced in step (D); and/or
- step (D) is performed after 90 mol-% of the radically polymerizable monomers which were originally contained in the monomer composition are polymerized; and/or
- the residual monomer content is reduced in step (D) by addition of the remainder of the predetermined amount of the first radical initiator; and/or
- after step (C), more preferably after step (D), further polymeric dispersant is added to the reaction mixture; and/or
- after step (C), more preferably after step (D), further polymeric dispersant is added to the reaction mixture in an amount of from 10 to 16 wt.-% relative to the amount of polymeric dispersant of step (A); and/or
- after step (C), more preferably after step (D), further polymeric dispersant is added to the reaction mixture, wherein the further polymeric dispersant is identical to the polymeric dispersant of step (A); and/or
- after step (C), more preferably after step (D), an acid is added to the reaction mixture; and/or
- the polymer dispersion which is obtained is useful as a flocculant in the sedimentation or flotation or filtration of solids; and/or as a thickener; and/or as a contaminant control; and/or as a dry strength aid or retention agent or drainage aid in papermaking.

### EXAMPLES

The following examples further illustrate the invention but are not to be construed as limiting its scope.

**Monomers:**

| | |
|---|---|
| DIMAPA quat: | acryloyl amidopropyl trimethylammonium chloride |
| ADAME quat: Acrylamide | acryloyl oxyethyl trimethylammonium chloride |

**Other ingredients:**

| | |
|---|---|
| Trilon C: | chelator |
| VA-044: | 2,2'-azobis[2-(2-imidazolin-2-yl)propane] dihydrochloride, radical initiator (starting temperature 44°C) |
| V-50: | 2,2'-azobis(2-amidinopropane) dihydrochloride, radical initiator (starting temperature 56°C) |
| Acticide SPX: | biocide |

### Polymeric dispersant (homo DIMAPA quat.)

At first, 616 g water, 1345 g DIMAPA quat. (60 wt%) and sulfuric acid (50 wt%) to adjust the pH to 5.0±0.2 were weighed in a 3 L vessel. Then the monomer solution was sparked with nitrogen for 30 min by stirring. Subsequently, the aqueous solution was heated up to 60 °C and mercaptoethanol and VA-044 were added to the solution. After reaching tₘₐₓ an additional portion of initiator was given to the product for residual monomer burn out. Now the product was stirred for 2 h at 85 °C. After that the final aqueous product was cooled down to 30°C.

The dispersants were provided in 40 wt.-% aqueous solutions.

**Table 1: Dispersants.**

| dispersant | viscosity range [mPa·s] | M_{W, SEC} [g/mol] |
|---|---|---|
| standard | 350 - 600 | 150 - 220,000 |
| high M_{W} | 600 - 800 | 280 - 350,000 |

### Example 1:

In a discontinuous process (batch size 1,000 kg), acrylamide and ADAME quat. were polymerized in an aqueous solution in the presence of homo DIMAPA quat. (polymeric dispersant). The water-phase was prepared at 60 rpm.

Firstly, 184.80 kg soft water, 220.90 kg Bio-acryl amide (43 wt.-%), 118.80 kg ADAME quat (80 wt%), 385.00 kg polymeric dispersant, 10.00 kg ammonium sulphate and 0.25 kg Trilon C were loaded into the reaction vessel. The pH value was adjusted to pH 4.8±0.2 with approximately 0.90 kg of sulphuric acid (50 %). The vessel was heated up to 30°C and was evacuated five times before being aerated with nitrogen. The initiator composition was added at a negative pressure of 0.5 bar and maximum agitator speed. Initiating started at 30±1°C with the addition of 0.015 kg sodium persulfate in 0.30 kg soft water, 0.010 kg sodium bisulfite in 0.20 kg soft water, 0.04 kg V-50 in 0.40 kg soft water and 0.0003 kg *t-*butylhydroperoxide (70 %) in 0.030 kg soft water. Afterwards the vessel was aerated again with nitrogen. After reaching the maximum temperature, a solution of 0.40 kg V-50 in 4.00 kg soft water was added to reduce the monomer content. After a one hour post reaction time, the product was cooled down to a temperature below 40°C. Then, 8.30 kg citric acid, 50.00 kg polymeric dispersant and 0.85 kg Acticide SPX were added and the product was cooled down to a temperature below 30°C.

### Example 2:

### Preparation of aqueous dispersions (active polymer: acrylamide/ADAME quat. copolymer with 50 wt.-% cationicity)

The aqueous dispersions were prepared in analogy to Example 1. Initiating started at 35°C with the initiator compositions of Table 2.

**Table 2: Addition sequence of initiator compositions I-1 and C-1.**

| **initiator composition** | | |
|---|---|---|
| compound | **I-1 (inventive)** | **C-1 (comparative)** |
| | kg/100 kg | kg/100 kg |
| sodium persulfate in | 0.002 | 0.004 |
| soft water | 0.030 | 0.040 |
| sodium bisulfite in | 0.001 | 0.004 |
| soft water | 0.020 | 0.040 |
| V-50 in | 0.004 | - |
| soft water | 0.040 | - |
| *t*-butylhydroperoxide (70 wt.-%) in | 3·10⁻⁵ | 6·10⁻⁴ |
| soft water | 0.003 | 0.010 |

**Table 3: Preparation of polymeric dispersions with C-1 and I-1, respectively.**

| polymeric dispersion | initiator | dispersant (M_{W} [g/mol]) | actives (discrete : dispersant) [wt.-%] | torque [N/cm] | product viscosity [mPa·s] | brine viscosity [mPa·s] |
|---|---|---|---|---|---|---|
| **PC-1** (comparative) | **C-1** redox with t-BHP dosing | standard (200,000) | 19 : 14 | 15 | 8,400 | 250 |
| **PI-1** (inventive) | **I-1** 37.5/37.5/100/0.75 (redox/azo) | high M_{W} (320,000) | 19 : 14 | 20 | 14,000 | 910 |

Both products displayed good stability.

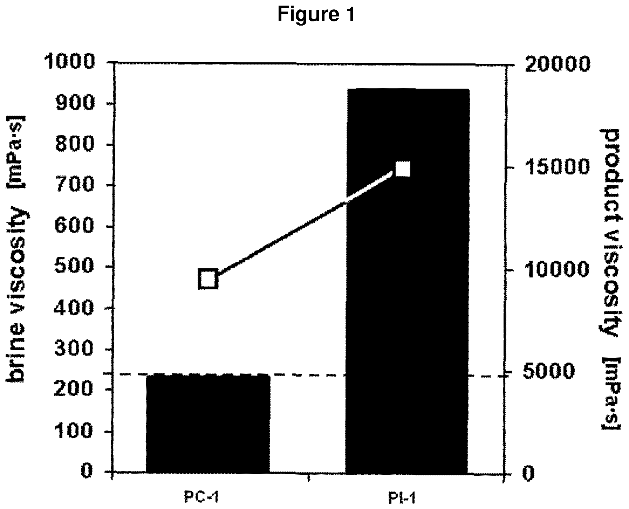

Figure 1 shows the brine viscosities (shown as bars) and the product viscosities (shown as □) of the inventive polymeric dispersion PI-1 and the comparative polymeric dispersion PC-1.

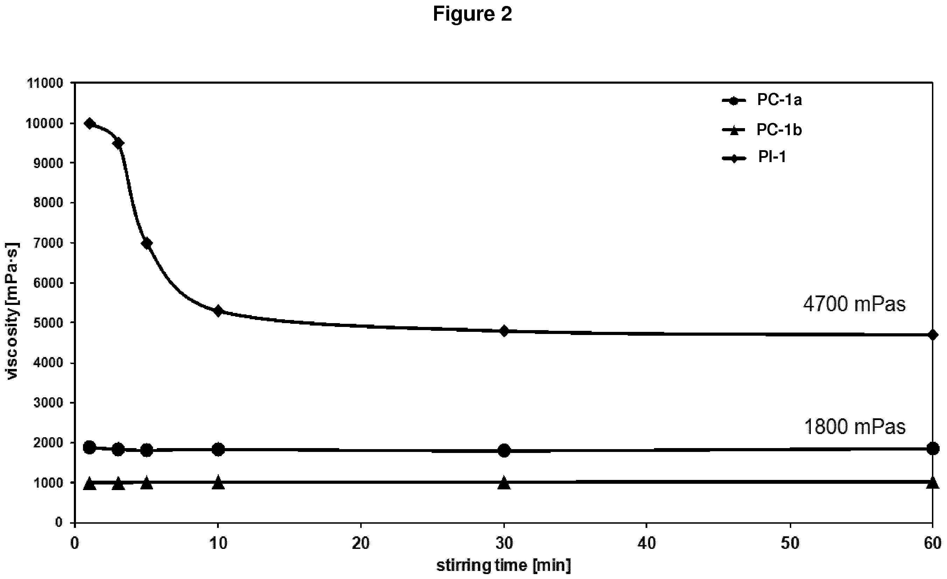

Figure 2 shows the make-down behavior of the inventive polymeric dispersion PI-1 and the comparative polymeric dispersions PC-1a and PC-1b. Both PC-1a and PC-1b are production batches of PC-1 which have different viscosities but still are within the specification range of PC-1. PI-1 has a higher solution viscosity (brine viscosity = 990 mPa·s) due to the higher molecular weight of the retention polymer.

### Example 3:

### Preparation of aqueous dispersions (active polymer: acrylamide/ADAME quat. copolymer with 20 wt.-% cationicity)

The aqueous dispersions were prepared in analogy to Example 1. Initiating started at 35°C with the initiator compositions of Table 4.

**Table 4: Addition sequence of initiator compositions I-2 and C-1.**

| **initiator composition** | | |
|---|---|---|
| compound | **I-2 (inventive)** | **C-1 (comparative)** |
| | kg/100 kg | kg/100 kg |
| sodium persulfate in | 0.005 | 0.004 |
| soft water | 0.100 | 0.040 |
| sodium bisulfite in | 0.004 | 0.004 |
| soft water | 0.080 | 0.040 |
| V-50 in | 0.015 | - |
| soft water | 0.150 | - |
| *t*-butylhydroperoxide (70 wt.-%) in | 0.0001 | 6·10⁻⁴ |
| soft water | 0.100 | 0.010 |

**Table 5: Preparation of polymeric dispersions with C-1 and I-2, respectively.**

| polymeric dispersion | initiator | dispersant (M_{W} [g/mol]) | actives (hM_{w}:IM_{w}) [wt.-%] | torque [N/cm] | viscosity [mPa·s] | | | % sediment (centrifuge) |
|---|---|---|---|---|---|---|---|---|
| | | | | | product | brine | solution | |
| **PC-2** (comparative) | **C-1** | standard (200,000) | 17.8 : 12.6 | 15 | <9,000 | 250 | 700 | >30 |
| **PI-2** (inventive) | **I-2** | high M_{W} (260,000) | 19 : 8 | 34 | 13,000 | 730 | 1,100 | 21 |

Both products displayed good stability.

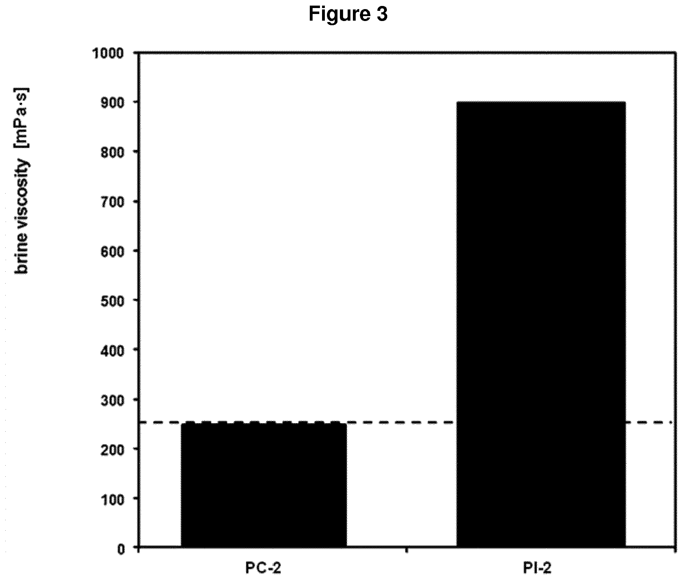

Figure 3 shows the brine viscosities of the inventive polymeric dispersion PI-2 and the comparative polymeric dispersion PC-2.

### Application examples

### Example 4:

### Retention

### Method:

Furnish type: TMP-coated broke furnish, 3.8% diluted with mill white water to 0.8% working consistency.

The laboratory trials were performed using a DFS 03 from BTG Mütek GmbH.

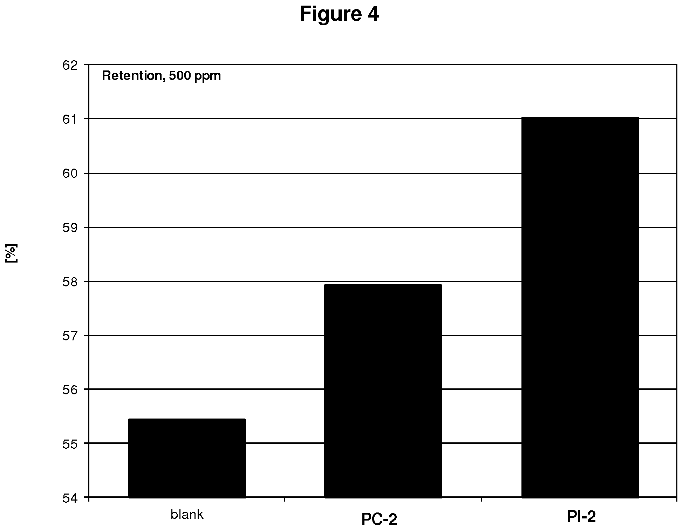

1000 mL of a 0.8% furnish were mixed at 800 rpm for 5 seconds, then 10 seconds at 1000 rpm, addition of the polymer, additional 10 seconds at 800 rpm and 5 seconds at 600 rpm for de-aeration of the furnish. App. 200 mL of the solution were collected. The results are displayed in Figure 4 showing the positive impact on retention at 500 ppm polymer for the inventive polymeric dispersion PI-2 compared to the comparative polymeric dispersion PC-2 and the blank.

### Example 5:

### Ash retention

### Method:

Furnish type: TMP-coated broke furnish, 3.8% diluted with mill white water to 0.8% consistency.

The laboratory trials were performed using a DFS 03 from BTG Mütek GmbH.

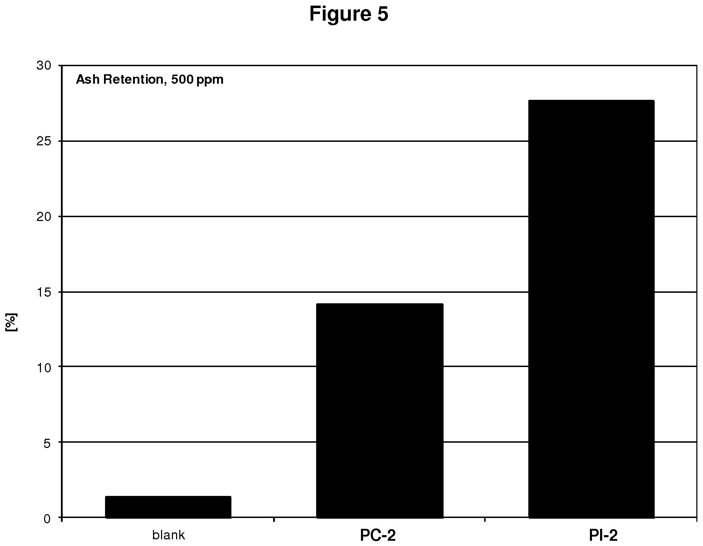

1000 mL of a 0.8% furnish were mixed at 800 rpm for 5 seconds, then 10 seconds at 1000 rpm, addition of the polymer, additional 10 seconds at 800 rpm and 5 seconds at 600 rpm for de-aeration of the furnish. Afterwards the ash retention is determined by ashing the retention filter paper at 550°C. Figure 5 shows the positive impact on the ash retention at 550ºC and 500 ppm polymer for the inventive polymeric dispersion PI-2 compared to the comparative polymeric dispersion PC-2 and the blank.

### Example 6:

### Drainage

### Method:

Furnish type: TMP-coated broke furnish, 3.8% diluted with mill white water to 0.8% concistency

The laboratory trials were performed using a DFR 04 from BTG Mütek GmbH.

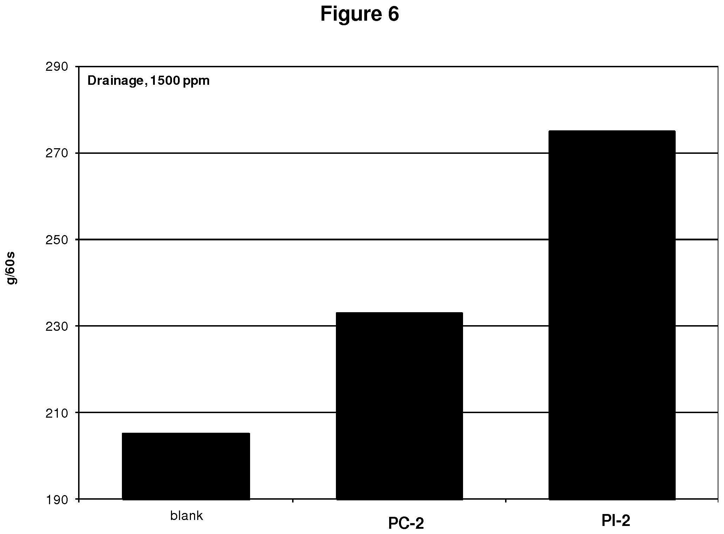

1000mL of a 0.8% furnish were mixed at 700 rpm for 5 seconds, then 10 seconds at 800 rpm, addition of the polymer, additional 10 seconds at 600 rpm and 5 seconds at 500 rpm for de-aeration of the furnish. After 60 seconds, the drainage is gravimetrically recorded by the white water volume in function of time. Figure 6 shows the better dewatering performance of the inventive polymeric dispersion PI-2 compared to the comparative polymeric dispersion PC-2 and the blank.

### Example 7:

### Drainage

### Method:

Sludge dewatering test under shear: digested sludge with 3.3 wt% dry solid

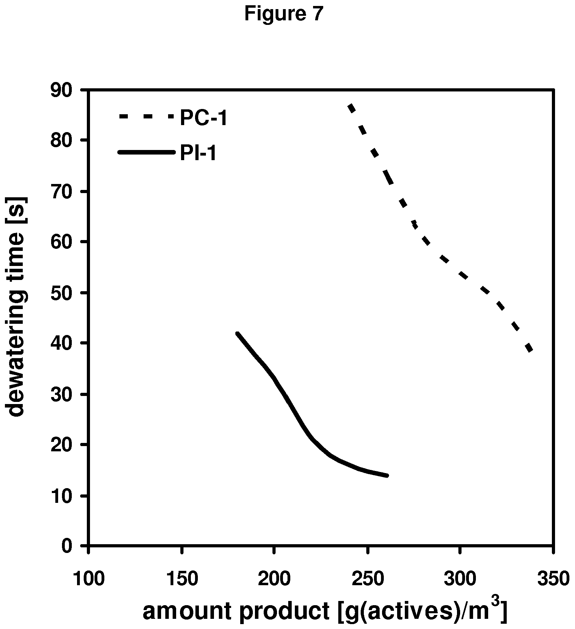

500 ± 10 ml of digested sludge (conditioned via agitation) are given into the vessel and the corresponding amount of a 0.1 wt% active solid based solution of the product (sheared with an Ultra Turrax T 25 N, 24000 rpm for 60 ± 0.5 s) is added. The sludge with product (mixed at 1000 ± 20 rpm for 10 ± 0.5 s) is given onto the dewatering sieve (200 µm) and the filtration time for 200 ml filtrate is determined. Afterwards the clarity of the filtrate is determined via a clarity wedge. Figure 7 shows the better dewatering performance of the inventive polymeric dispersion PI-1 compared to the comparative polymeric dispersion PC-1.

### Example 8:

### Retention, drainage and ash retention

### Method:

Furnish type: de-inked (DIP) newsprint, 13.2% diluted with mill white water to 0.95% working consistency.

The laboratory trials were performed using a DFS 03 from BTG Mütek GmbH.

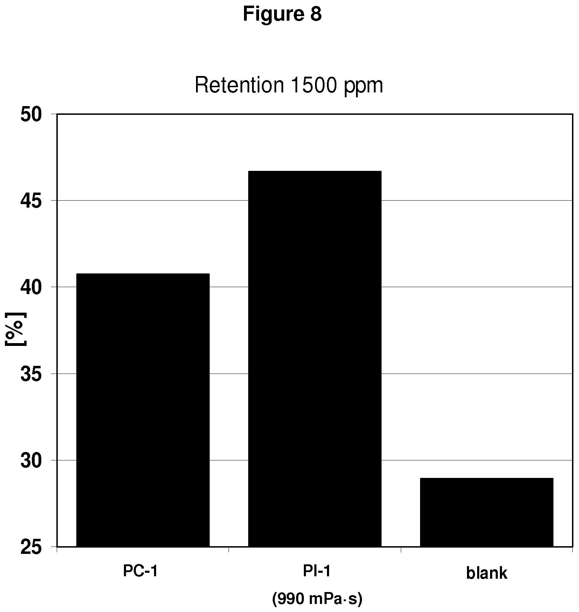

1000 mL of a 0.95% furnish were mixed at 800 rpm for 10 seconds, addition of the polymer (1500 ppm), then 10 seconds at 1000 rpm, additional 5 seconds at 600 rpm for de-aeration of the furnish. App. 200 mL of the solution were collected. The results are displayed in Figures 8 to 10 showing that the inventive polymeric dispersion PI-1 exceeds significantly the performance of the comparative polymeric dispersion PC-1, especially in retention and ash retention by approximately 10 %.

**Table 6: Application test of PI-1 and PC-1 with de-inked (DIP) newsprint.**

| polymeric dispersion | actives (hM_{w}:IM_{w}) [wt.-%] | brine viscosity [mPa·s] | sediment [%] | stability at 40°C |
|---|---|---|---|---|
| **PC-1** (comparative) | 19:14.4 | 250 | 25 | + |
| **PI-1** (inventive) | 19:14.4 | 990 | 19 | + |

Figure 8 shows the positive impact on retention at 1500 ppm polymer for the inventive polymeric dispersion PI-1 compared to the comparative polymeric dispersion PC-1 and the blank.

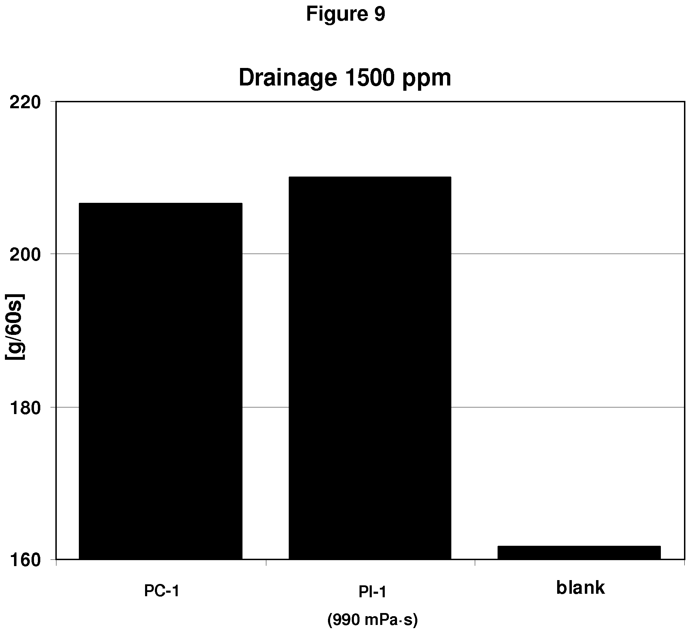

Figure 9 shows the positive impact on drainage at 1500 ppm polymer for the inventive polymeric dispersion PI-1 compared to the comparative polymeric dispersion PC-1 and the blank.

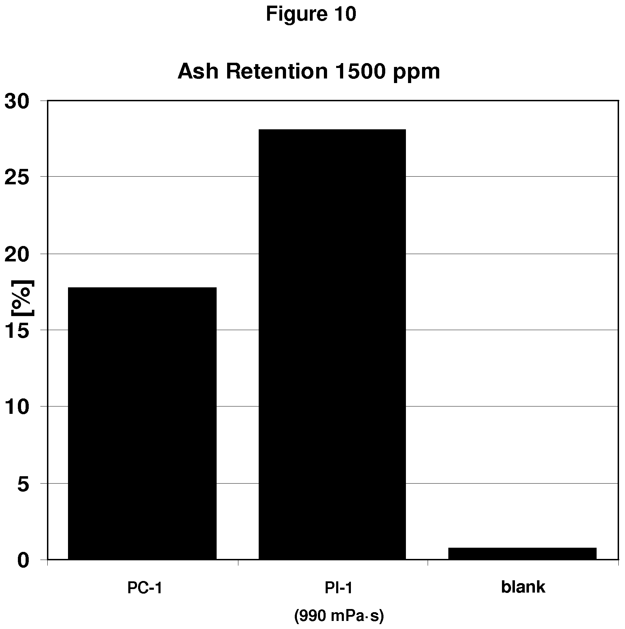

Figure 10 shows the positive impact on ash retention at 1500 ppm polymer for the inventive polymeric dispersion PI-1 compared to the comparative polymeric dispersion PC-1 and the blank.

### Example 9:

### Retention and drainage

### Method:

Furnish type: board (100% recycled paper), 4.5% diluted with mill white water to 0.94% working consistency.
Additive: Perform PC435 (powder)

The laboratory trials were performed using a DFS 03 from BTG Mütek GmbH.

### (a) single system

1000 mL of a 0.94% furnish were mixed at 800 rpm for 10 seconds, addition of the polymer (1500 ppm), then 10 seconds at 1000 rpm, additional 5 seconds at 600 rpm for de-aeration of the furnish.

### (b) combi system with powder

1000 mL of a 0.94% furnish were mixed at 800 rpm for 5 seconds, addition of the powder polymer (400 ppm) and 10 seconds at 1000 rpm, addition of the dispersion polymer (1000 ppm), then 10 seconds at 800 rpm, additional 5 seconds at 600 rpm for de-aeration of the furnish.

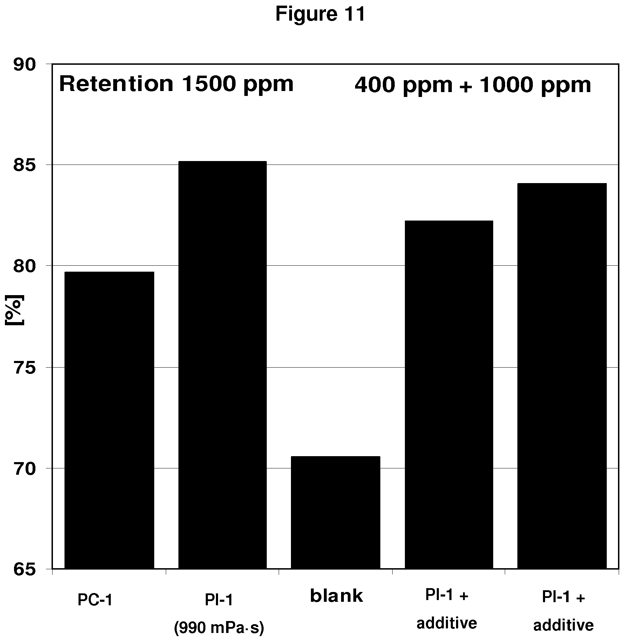

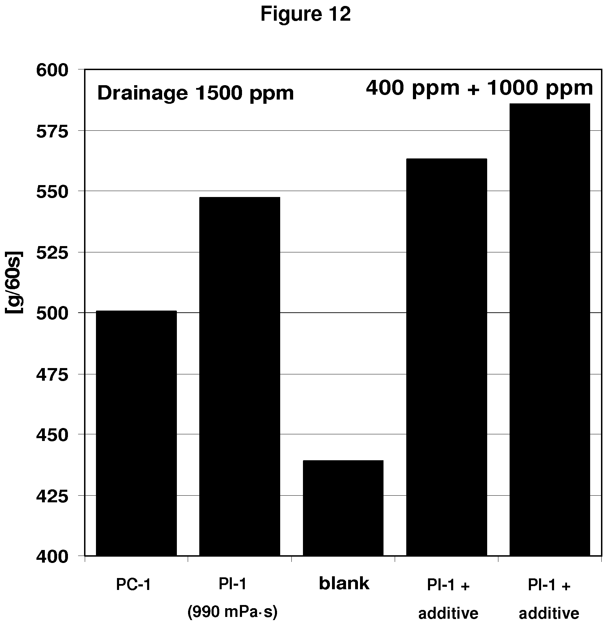

App. 200 mL of the solution were collected. The results are displayed in Figures 11 and 12 showing that the inventive polymeric dispersion PI-1, in particular in combination with the additive, exceeds the performance of the comparative polymeric dispersion PC-1 in retention and drainage.

Figure 11 shows the positive impact on retention for the inventive polymeric dispersion PI-1 and the combination of PI-1 and additive compared to the comparative polymeric dispersion PC-1 and the blank.

Figure 12 shows the positive impact on drainage for the inventive polymeric dispersion PI-1 and the combination of PI-1 and additive compared to the comparative polymeric dispersion PC-1 and the blank.

### Example 10:

### Retention, drainage and ash retention

### Method:

Furnish type: pulp with TMP for LWC papers, 3.3% diluted with mill white water to 0.92% working consistency.

The laboratory trials were performed using a DFS 03 from BTG Mütek GmbH.

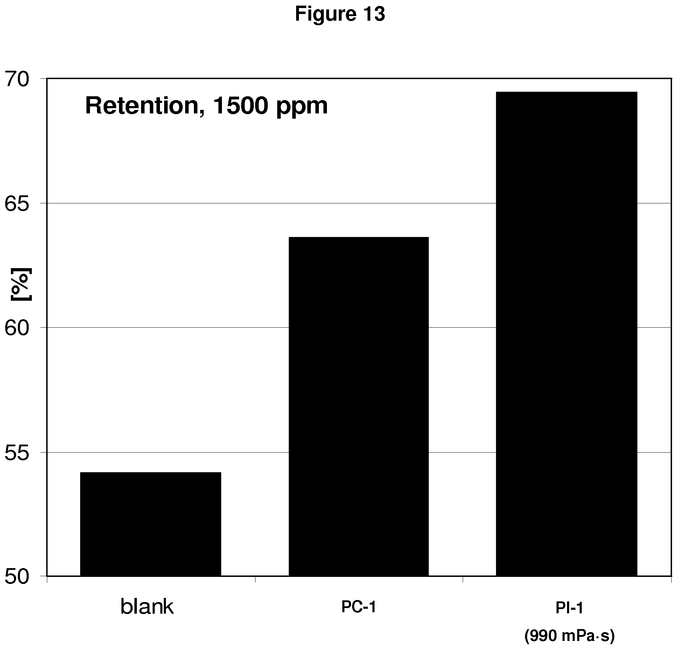

1000 mL of a 0. 92% furnish were mixed at 800 rpm for 10 seconds, addition of the polymer (1500 ppm), then 10 seconds at 1000 rpm, additional 5 seconds at 600 rpm for de-aeration of the furnish. App. 200 mL of the solution were collected. The results are displayed in Figures 13 to 15 showing that the inventive polymeric dispersion PI-1 exceeds the performance of the comparative polymeric dispersion PC-1 by approximately 10 %.

Figure 13 shows the positive impact on retention at 1500 ppm polymer for the inventive polymeric dispersion PI-1 compared to the comparative polymeric dispersion PC-1 and the blank.

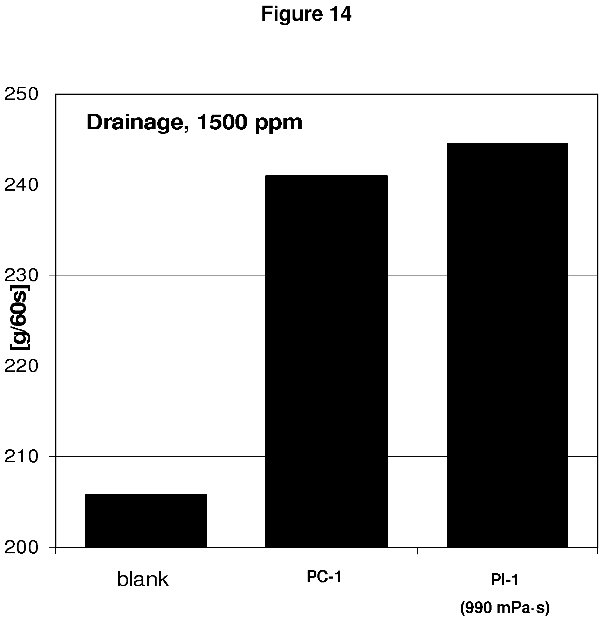

Figure 14 shows the positive impact on drainage at 1500 ppm polymer for the inventive polymeric dispersion PI-1 compared to the comparative polymeric dispersion PC-1 and the blank.

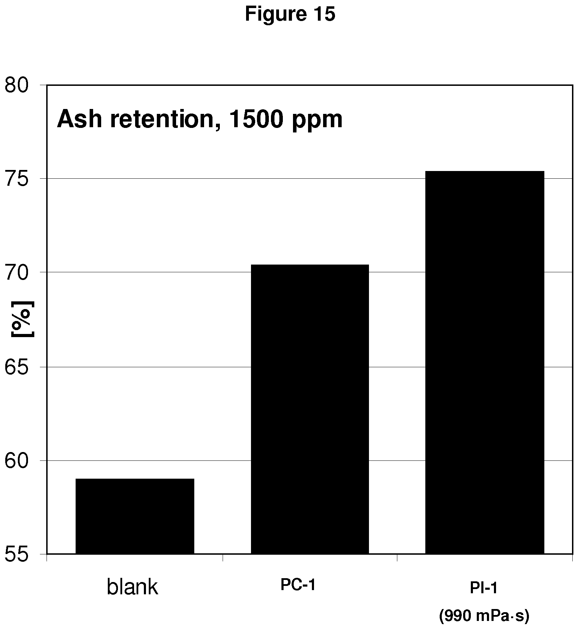

Figure 15 shows the positive impact on ash retention at 1500 ppm polymer for the inventive polymeric dispersion PI-1 compared to the comparative polymeric dispersion PC-1 and the blank.

### Example 11:

### Ash retention

### Method:

Furnish type: pulp with TMP for LWC papers, 3.68% diluted with mill white water to 0.79% working consistency.

The laboratory trials were performed using a DFS 03 from BTG Mütek GmbH.

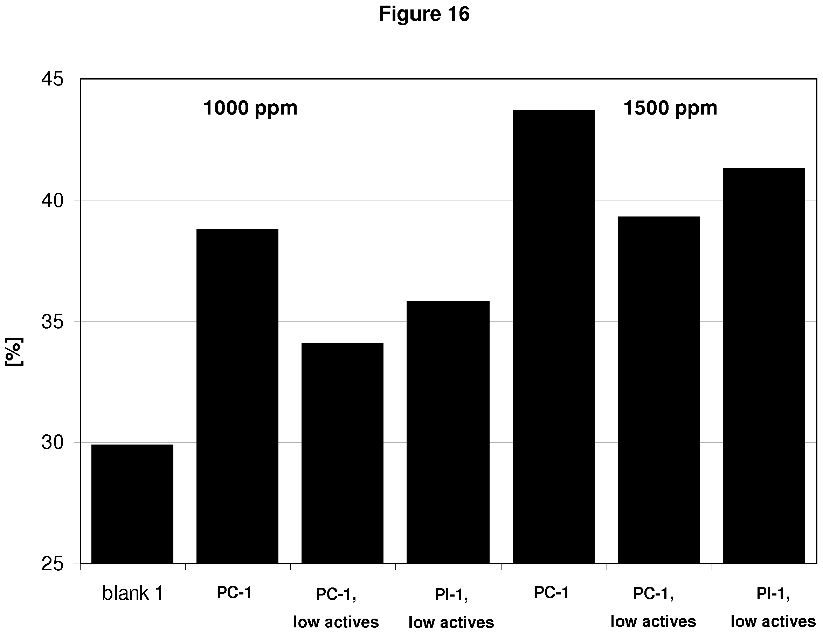

1000 mL of a 0.79% furnish were mixed at 800 rpm for 5 seconds, and then 1000 rpm for 10 seconds, addition of the polymer (1000/1500 ppm), then 10 seconds at 800 rpm, additional 5 seconds at 600 rpm for de-aeration of the furnish. App. 200 mL of the solution were collected. The results are displayed in Figure 16 showing that the inventive polymeric dispersion PI-1 with low actives and high salt exceeds the performance of the comparative polymeric dispersion PC-1 with corresponding low actives.

Figure 16 shows the positive impact on ash retention at 1000 and 1500 ppm polymer for the inventive polymeric dispersion PI-1 with low actives and high salt compared to the comparative polymeric dispersion PC-1, PC-1 with corresponding low actives and the blank.

## Claims

1. A method for manufacturing a polymer dispersion comprising the steps of
(A) preparing a reaction mixture comprising
(i) a polymeric dispersant; and
(ii) a monomer composition comprising radically polymerizable monomers;
(B) optionally, heating the reaction mixture to a temperature above room temperature;
(C) polymerizing the radically polymerizable monomers by adding to the reaction mixture sequentially or simultaneously
(iii) a predetermined amount of a redox initiator system comprising an oxidizing agent and a reducing agent;
(iv) a predetermined amount of a first radical initiator; and
(v) a predetermined amount of a second radical initiator;
wherein the second radical initiator is neither identical to the oxidizing agent which is comprised in the redox initiator system, nor to the first radical initiator;
with the proviso that at least a portion of said predetermined amount of the redox initiator system, at least a portion of said predetermined amount of the first radical initiator, and at least a portion of said predetermined amount of the second radical initiator is added to the reaction mixture before 90 mol-% of the radically polymerizable monomers, which were originally contained in the monomer composition, are polymerized; and
(D) optionally, reducing the residual monomer content by adding to the reaction mixture
- the remainder of said predetermined amount of the redox initiator system, the remainder of said predetermined amount of the first radical initiator, and/or the remainder of said predetermined amount of the second radical initiator; and/or
- a third radical initiator.

2. The method according to claim 1, wherein step (C) comprises the substeps of
(C₁) adding the at least portion of the predetermined amount of the redox initiator system to the reaction mixture;
(C₂) adding the at least portion of the predetermined amount of the first radical initiator to the reaction mixture; and
(C₃) adding the at least portion of the predetermined amount of the second radical initiator to the reaction mixture;
wherein substep (C₂) is performed after substep (C₁), and wherein substep (C₃) is performed after substep (C₂).

3. The method according to claim 2, wherein in substep (C₁) the oxidizing agent is added prior to the reducing agent.

4. The method according to any of the preceding claims, wherein the amount of the reducing agent is adjusted to control the weight average molecular weight M_{w} of the polymer that is obtained in step (C).

5. The method according to any of the preceding claims, wherein the reaction mixture is aqueous.

6. The method according to any of the preceding claims, wherein step (C) proceeds under adiabatic conditions.

7. The method according to any of the preceding claims, wherein the monomer composition comprises a radically polymerizable non-ionic monomer according to general formula (I) 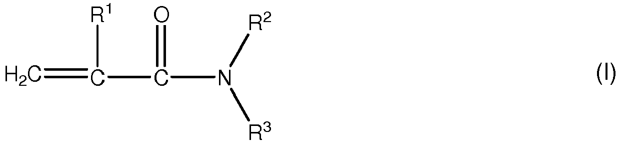 wherein
R¹ means -H or -C₁-C₃-alkyl; and
R² and R³ mean, independently of each other, -H, -C₁-C₅-alkyl or -C₁-C₅-hydroxyalkyl.

8. The method according to any of the preceding claims, wherein the monomer composition comprises a radically polymerizable cationic monomer according to general formula (II) 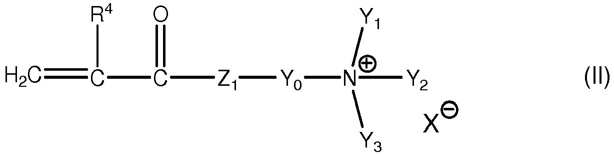 wherein
R⁴ means -H or -C₁-C₃-alkyl;
Z₁ means -O- or -NR⁵ with R⁵ being -H or -C₁-C₃-alkyl;
Y₀ means -C₂-C₆-alkylene-, optionally substituted with one or more hydroxy groups;
Y₁, Y₂, Y₃, independently of each other, mean -C₁-C₆-alkyl; and
X⁻ means halogen, pseudo-halogen, acetate, or SO₄CH₃⁻.

9. The method according to any of the preceding claims, wherein the polymeric dispersant has a weight average molecular weight M_{w} as determined by SEC of at least 230,000 g/mol.

10. The method according to any of the preceding claims, wherein the polymeric dispersant is a cationic polymer derived from a monomer composition comprising a cationic monomer selected from the group consisting of trimethylammoniumalkyl(meth)acrylate halides, trimethylammoniumalkyl(meth)acrylamide halides and diallyldialkylammonium halides.

11. The method according to any of the preceding claims, wherein the weight average molecular weight and/or the chemical composition of the polymeric dispersant differs from the weight average molecular weight and/or the chemical composition of the polymer that is obtained in step (C).

12. The method according to any of the preceding claims, wherein before and/or after step (C), a water-soluble salt is added in quantities of 0.1 to 5.0 wt.-%, based on the total weight of the reaction mixture.

13. A polymer dispersion comprising
(i) a polymeric dispersant and
(ii) a polymer derived from a monomer composition comprising radically polymerizable monomers,
which polymer dispersion is obtainable by the method according to any of the preceding claims.

14. The dispersion according to claim 13, which contains 0.5 to 5.0 wt.-% of acid and/or 0.5 to 5.0 wt.-% of salt, the overall content of acid and salt amounting to a maximum of 5.0 wt.-%, based on the total weight of the polymer dispersion.

15. Use of the polymer dispersion according to claim 13 or 14
- as a flocculant in the sedimentation, flotation or filtration of solids;
- as a thickener;
- as a contaminant control;
- as a dry strength aid, retention agent or drainage aid in papermaking.

## Patentansprüche

1. Verfahren zur Herstellung einer Polymerdispersion, umfassend die folgenden Schritte:
(A) Herstellen eines Reaktionsgemisches, umfassend
(i) ein polymeres Dispergiermittel; und
(ii) eine Momomerzusammensetzung, umfassend radikalisch polymerisierbare Monomere;
(B) optional Erhitzen des Reaktionsgemisches auf eine Temperatur über Raumtemperatur;
(C) Polymerisieren der radikalisch polymerisierbaren Monomere durch sequenzielles oder gleichzeitiges Zusetzen zu dem Reaktionsgemisch:
(iii) einer vorbestimmten Menge eines Redox-Initiatorsystems, umfassend ein Oxidationsmittel und ein Reduktionsmittel;
(iv) einer vorbestimmten Menge eines ersten Radikalinitiators; und
(v) einer vorbestimmten Menge eines zweiten Radikalinitiators;
wobei der zweite Radikalinitiator weder mit dem Oxidationsmittel, das in dem Redox-Initiatorsystem enthalten ist, noch mit dem ersten Radikalinitiator identisch ist;
mit der Maßgabe, dass wenigstens ein Teil der vorbestimmten Menge des Redox-Initiatorsystems, wenigstens ein Teil der vorbestimmten Menge des ersten Radikalinitiators und wenigstens ein Teil der vorbestimmten Menge des zweiten Radikalinitiators zu dem Reaktionsgemisch zugesetzt wird, bevor 90 Mol-% der radikalisch polymerisierbaren Monomere, die ursprünglich in der Momomerzusammensetzung enthalten waren, polymerisiert sind; und
(D) optional Reduzieren des restlichen Monomergehalts durch Zusetzen zu dem Reaktionsgemisch
- des Restes der vorbestimmten Menge des Redox-Initiatorsystems, des Restes der vorbestimmten Menge des ersten Radikalinitiators und/oder des Restes der vorbestimmten Menge des zweiten Radikalinitiators; und/oder
- eines dritten Radikalinitiators.

2. Verfahren nach Anspruch 1, wobei Schritt (C) die folgenden Unterschritte umfasst:
(C₁) Zusetzen von wenigstens dem Teil der vorbestimmten Menge des Redox-Initiatorsystems zu dem Reaktionsgemisch;
(C₂) Zusetzen von wenigstens dem Teil der vorbestimmten Menge des ersten Radikalinitiators zu dem Reaktionsgemisch; und
(C₃) Zusetzen von wenigstens dem Teil der vorbestimmten Menge des zweiten Radikalinitiators zu dem Reaktionsgemisch;
wobei der Unterschritt (C₂) nach dem Unterschritt (C₁) durchgeführt wird und wobei der Unterschritt (C₃) nach dem Unterschritt (C₂) durchgeführt wird.

3. Verfahren nach Anspruch 2, wobei im Unterschritt (C₁) das Oxidationsmittel vor dem Reduktionsmittel zugesetzt wird.

4. Verfahren nach einem der vorhergehenden Ansprüche, wobei die Menge des Reduktionsmittels eingestellt wird, um das gewichtsmittlere Molekulargewicht M_{w} des Polymers zu kontrollieren, das in Schritt (C) erhalten wird.

5. Verfahren nach einem der vorhergehenden Ansprüche, wobei das Reaktionsgemisch wässrig ist.

6. Verfahren nach einem der vorhergehenden Ansprüche, wobei der Schritt (C) unter adiabatischen Bedingungen verläuft.

7. Verfahren nach einem der vorhergehenden Ansprüche, wobei die Momomerzusammensetzung ein radikalisch polymerisierbares nicht-ionisches Monomer gemäß der allgemeinen Formel (I) enthält: 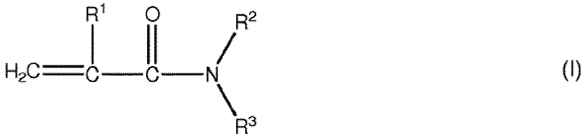 wobei
R¹ für -H oder -C₁-C₃-Alkyl steht; und
R² und R³ unabhängig voneinander für -H, -C₁-C₅-Alkyl oder -C₁-C₅-Hydroxyalkyl stehen.

8. Verfahren nach einem der vorhergehenden Ansprüche, wobei die Momomerzusammensetzung ein radikalisch polymerisierbares kationisches Monomer gemäß der allgemeinen Formel (II) enthält: 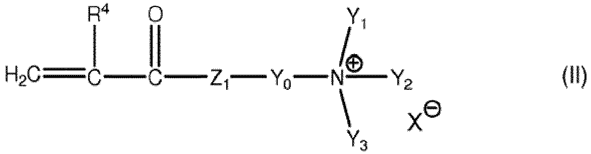
wobei R⁴ für -H oder -C₁-C₃-Alkyl steht;
Z₁ für -O- oder -NR⁵ steht, wobei R⁵ -H oder -C₁-C₃-Alkyl ist;
Y₀ für -C₂-C₆-Alkylen-, optional substituiert mit einer oder mehreren Hydroxygruppen, steht;
Y₁, Y₂, Y₃ unabhängig voneinander für -C₁-C₆-Alkyl stehen; und
X⁻ für Halogen, Pseudohalogen, Acetat oder SO₄CH₃⁻ steht.

9. Verfahren nach einem der vorhergehenden Ansprüche, wobei das polymere Dispergiermittel ein gewichtsmittleres Molekulargewicht M_{w}, bestimmt durch SEC, von wenigstens 230.000 g/mol aufweist.

10. Verfahren nach einem der vorhergehenden Ansprüche, wobei das polymere Dispergiermittel ein kationisches Polymer ist, das von einer Momomerzusammensetzung abgeleitet ist, die ein kationisches Monomer umfasst, das aus der Gruppe ausgewählt ist, die aus Trimethylammoniumalkyl(meth)acrylat-Halogeniden, Trimethylammoniumalkyl(meth)acrylamid-Halogeniden und Diallyldialkylammonium-Halogeniden besteht.

11. Verfahren nach einem der vorhergehenden Ansprüche, wobei sich das gewichtsmittlere Molekulargewicht und/oder die chemische Zusammensetzung des polymeren Dispergiermittels von dem gewichtsmittleren Molekulargewicht und/oder der chemischen Zusammensetzung des Polymers unterscheidet, das in Schritt (C) gewonnen wird.

12. Verfahren nach einem der vorhergehenden Ansprüche, wobei vor und/oder nach dem Schritt (C) ein wasserlösliches Salz in Mengen von 0,1 bis 5,0 Gew.-%, basierend auf dem Gesamtgewicht des Reaktionsgemisches, zugesetzt wird.

13. Polymerdispersion, umfassend
(i) ein polymeres Dispergiermittel; und
(ii) ein Polymer, das von einer Momomerzusammensetzung abgeleitet ist, die radikalisch polymerisierbare Monomere umfasst;
wobei diese Polymerdispersion durch das Verfahren nach einem der vorhergehenden Ansprüche gewonnen werden kann.

14. Dispersion nach Anspruch 13, die 0,5 bis 5,0 Gew.-% Säure und/oder 0,5 bis 5,0 Gew.-% Salz enthält, wobei der Gesamtgehalt von Säure und Salz maximal 5,0 Gew.-% basierend auf dem Gesamtgewicht der Polymerdispersion beträgt.

15. Verwendung der Polymerdispersion nach Anspruch 13 oder 14
- als Flockungsmittel bei der Sedimentation, Flotation oder Filtration von Feststoffen;
- als Verdickungsmittel;
- als Verunreinigungskontrolle;
- als Trockenfestigkeitshilfsmittel, Retentionsmittel oder Entwässerungshilfsmittel bei der Papierherstellung.

## Revendications

1. Procédé de fabrication d'une dispersion de polymère comprenant les étapes de
(A) préparation d'un mélange réactionnel comprenant
(i) un dispersant polymérique ; et
(ii) une composition de monomère comprenant des monomères polymériséables de manière radicalaire
(B) chauffage éventuel du mélange réactionnel à une température supérieure à la température ambiante ;
(C) polymérisation des monomères polymériséables de manière radicalaire par l'ajout séquentiel ou simultané au mélange réactionnel
(iii) d'une quantité prédéterminée d'un système amorceur redox comprenant un agent d'oxydation et un agent de réduction ;
(iv) d'une quantité prédéterminée d'un premier initiateur radicalaire ; et
(v) une quantité prédéterminée d'un deuxième initiateur radicalaire ;
dans lequel le deuxième initiateur radicalaire n'est ni identique à l'agent d'oxydation qui est compris dans le système amorceur redox, ni au premier initiateur radicalaire ;
à condition qu'au moins une partie de ladite quantité prédéterminée du système amorceur redox, qu'au moins une partie de ladite quantité prédéterminée du premier initiateur radicalaire et qu'au moins une partie de ladite quantité prédéterminée du deuxième initiateur radicalaire soit ajoutée au mélange réactionnel avant que 90 % en mole des monomères polymériséables de manière radicalaire, qui étaient initialement contenus dans la composition de monomère, ne soient polymérisés ; et
(D) réduction éventuelle de la teneur en monomère résiduel par l'ajout au mélange réactionnel
- du reste de ladite quantité prédéterminée du système amorceur redox, du reste de ladite quantité prédéterminée du premier initiateur radicalaire et/ou du reste de ladite quantité prédéterminée du deuxième initiateur radicalaire ; et/
- un troisième initiateur radicalaire.

2. Procédé selon la revendication 1, dans lequel l'étape (C) comprend les sous-étapes
(C₁) d'ajout de l'au moins une partie de la quantité prédéterminée du système amorceur redox au mélange réactionnel ;
(C₂) d'ajout de l'au moins une partie de la quantité prédéterminée du premier initiateur radicalaire au mélange réactionnel ; et
(C₃) d'ajout de l'au moins une partie de la quantité prédéterminée du deuxième initiateur radicalaire au mélange réactionnel ;
dans lequel la sous-étape (C₂) est effectuée après la sous-étape (C₁), et dans lequel la sous-étape (C₃) est effectuée après la sous-étape (C₂).

3. Procédé selon la revendication 2, dans lequel dans la sous-étape (C₁), l'agent d'oxydation est ajouté avant l'agent de réduction.

4. Procédé selon l'une quelconque des revendications précédentes, dans lequel la quantité d'agent de réduction est ajoutée pour contrôler le poids moléculaire moyen en poids M_{W} du polymère qui est obtenu dans l'étape (C).

5. Procédé selon l'une quelconque des revendications précédentes, dans lequel le mélange réactionnel est aqueux.

6. Procédé selon l'une quelconque des revendications précédentes, dans lequel l'étape (C) se produit dans des conditions adiabatiques.

7. Procédé selon l'une quelconque des revendications précédentes, dans lequel la composition de monomère comprend un monomère non ionique polymériséable de manière radicalaire répondant à la formule générale (I) 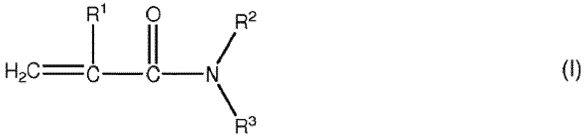 dans laquelle
R¹ représente -H ou alkyle en C₁-C₃ ; et
R² et R³ représentent, indépendamment l'un de l'autre, -H, alkyle en C₁-C₃ ou, hydroxyalkyle en C₁-C₅.

8. Procédé selon l'une quelconque des revendications précédentes, dans lequel la composition de monomère comprend un monomère cationique polymériséable de manière radicalaire répondant à la formule générale (II) 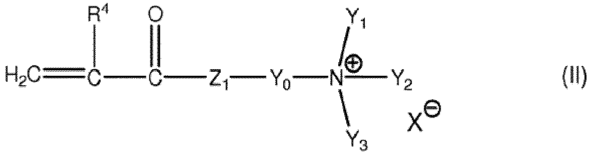 dans laquelle
R¹ représente -H ou alkyle en C₁-C₃ ;
Z₁ représente -O- ou NR⁵, R⁵ représentant -H ou alkyle en C₁-C₃ ;
Y₀ représente un alkylène en C₂-C₆, éventuellement substitué par au moins un groupe hydroxy ;
Y₁, Y₂, Y₃ représentent, indépendamment les uns des autres, alkyle en C₁-C₆ ; et
X⁻ représente un halogène, un pseudo-halogène, un acétate ou SO₄CH₃⁻.

9. Procédé selon l'une quelconque des revendications précédentes, dans lequel le dispersant polymérique comporte un poids moléculaire moyen en poids M_{W} tel que déterminé par SEC d'au moins 230 000 g/mol.

10. Procédé selon l'une quelconque des revendications précédentes, dans lequel le dispersant polymérique est un polymère cationique dérivé d'une composition de monomère comprenant un monomère cationique choisi dans le groupe constitué d'halogénures de triméthylammoniumalkyl(méth)acrylate, d'halogénures de triméthylammoniumalkyl(méth)acrylamide et d'halogénures de diallyldialkylammonium.

11. Procédé selon l'une quelconque des revendications précédentes, dans lequel le poids moléculaire moyen en poids et/ou la composition chimique du dispersant polymérique est différent(e) du poids moléculaire moyen en poids et/ou de la composition chimique du polymère qui est obtenu dans l'étape (C).

12. Procédé selon l'une quelconque des revendications précédentes, dans lequel avant et/ou après l'étape (C), un sel hydrosoluble est ajouté dans des quantités comprises entre 0,1 et 5,0% en poids, en fonction du poids total du mélange réactionnel.

13. Dispersion de polymère comprenant
(i) un dispersant polymérique et
(ii) un polymère dérivé d'une composition de polymère comprenant des monomères polymériséables de manière radicalaire,
laquelle dispersion de polymère pouvant être obtenue par le procédé selon l'une quelconque des revendications précédentes.

14. Dispersion selon la revendication 13, qui contient entre 0,5 et 5,0 % en poids d'acide et/ou entre 0,5 et 5,0 % en poids de sel, la quantité totale d'acide et de sel comptant pour un maximum de 5,0 % en poids, en fonction du poids total de la dispersion de polymère.

15. Utilisation de la dispersion de polymère selon la revendication 13 ou 14
- en tant qu'adjuvant de floculation dans la sédimentation, la flottaison ou la filtration des matières solides ;
- en tant qu'agent d'épaississement ;
- en tant que contrôle de la contamination ;
- en tant qu'aide à la résistance à sec, qu'agent de rétention ou qu'adjuvant de drainage dans la fabrication du papier.
